# FASCICULE DE BREVET EUROPEEN

(11) **EP 3 924 448 B1**
(45) Date de publication et mention de la délivrance du brevet: **15.04.2026**
(21) Numéro de dépôt: 20755242.3
(22) Date de dépôt: 14.02.2020
(51) Int. Cl.: C09K 21/14, C09K 21/06, C25B 13/08, C09K 21/02, H01M 50/429

(54) **SÉPARATEURS À BASE DE CELLULOSE AVEC RETARDATEUR DE FLAMME, ET LEURS UTILISATIONS EN ÉLECTROCHIMIE**
CELLULOSEBASIERTE SEPARATOREN MIT FLAMMSCHUTZMITTEL UND VERWENDUNGEN DAVON IN DER ELEKTROCHEMIE
CELLULOSE-BASED SEPARATORS COMPRISING FLAME RETARDANT, AND USES THEREOF IN ELECTROCHEMISTRY

(30) Priorité: 15.02.2019 CA 3033917
(43) Date de publication de la demande: 22.12.2021
(60) Demande divisionnaire: 26156981.8
(73) Titulaire: Hydro-Québec, Montréal, Québec H2Z 1A4 (CA)
(72) Inventeur: DELAPORTE, Nicolas, Montreal, Québec H1W 1H4 (CA); PEREA, Alexis, Montreal, Québec H2K 2B4 (CA); ZAGHIB, Karim, Longueuil, Québec J4N 1T8 (CA)
(74) Mandataire: Lavoix
(86) Numéro de dépôt international: PCT/CA2020/050193
(87) Numéro de publication internationale: WO 2020/163960

(56) Documents cités:
- WO-A1-2018/000295
- CA-A1- 2 826 264
- CN-A- 101 148 526
- CN-A- 103 579 562
- CN-A- 104 752 658
- JP-A- 2005 019 234
- US-A1- 2007 221 891
- US-A1- 2013 302 702
- US-A1- 2013 330 637
- GUOLIANG DING ET AL: "A Polyborate Coated Cellulose Composite Separator for High Performance Lithium Ion Batteries", JOURNAL OF THE ELECTROCHEMICAL SOCIETY, vol. 162, no. 6, 1 January 2015 (2015-01-01), pages A834 - A838, XP055732797, ISSN: 0013-4651, DOI: 10.1149/2.0261506jes
- VILELA CARLA ET AL: "Nanocellulose/poly(methacryloyloxyethyl phosphate) composites as proton separator materials", CELLULOSE, SPRINGER NETHERLANDS, NETHERLANDS, vol. 23, no. 6, 26 August 2016 (2016-08-26), pages 3677 - 3689, XP036104320, ISSN: 0969-0239, [retrieved on 20160826], DOI: 10.1007/S10570-016-1050-7
- ZHANG, J. ET AL.: "Sustainable, heat resistant and flame-retardant cellulose-based composite separator for high-performance lithium ion battery", SCIENTIFIC REPORT, vol. 4, no. 3935, 3 February 2014 (2014-02-03), pages 1 - 8, XP055732791
- DING, G. ET AL.: "A Polyborate Coated Cellulose Composite Separator for High Performance Lithium Ion Batteries", JOURNAL OF THE ELECTROCHEMICAL SOCIETY, vol. 162, no. 6, 24 February 2015 (2015-02-24), pages A834 - A838, XP055732797

## Description

### DEMANDE RELIÉE

La présente demande revendique la priorité, sous la loi applicable, de la demande de brevet canadienne numéro 3 033 917 déposée le 15 février 2019.

### DOMAINE TECHNIQUE

La présente demande se rapporte au domaine des séparateurs utilisés en électrochimie, particulièrement aux séparateurs comportant des propriétés ignifuges ou résistants à la chaleur.

### ÉTAT DE LA TECHNIQUE

De nos jours, les batteries Li-ion sont très utilisées commercialement pour des applications telles que l'automobile, les téléphones portables ou le stockage stationnaire d'énergie. Un des axes importants de recherche dans le développement des batteries Li-ion se concentre sur leur sécurité. La compréhension des phénomènes liés à l'emballement thermique ainsi que les moyens d'empêcher cette réaction sont la clé du développement des batteries Li-ion à grande échelle (S. Abada, et al., J. Power Sources, 2016, 306, 178-192). En effet, il a été démontré que des conditions d'utilisation abusives d'une batterie peuvent conduire à son emballement thermique. De telles conditions peuvent être rencontrées, par exemple, lors d'une collision d'un véhicule électrique ou lorsqu'une batterie subit un échauffement, un court-circuit ou une surcharge (V. Ruiz, A. Pfrang, et al., Renewable and Sustainable Energy Reviews, 2018, 81, 1427-1452). Les principales conséquences de l'emballement thermique incluent l'embrasement de la batterie ainsi que le dégagement de vapeurs toxiques provenant de la combustion de l'électrolyte. Différentes stratégies intrinsèques à la batterie ont été développées afin de limiter ou supprimer les effets de l'emballement thermique, telles que la modification des matériaux de cathode et d'anode, l'ajout d'additifs dans l'électrolyte et l'utilisation de séparateurs possédant une stabilité thermique améliorée. La modification de la surface des matériaux d'électrodes peut aussi permettre de protéger les particules en contact avec l'électrolyte et ainsi limiter certaines réactions secondaires. Divers oxydes tels que Li₂CO₃, SiO₂ ou SnO₂ peuvent être utilisés (C. Li, H.P. Zhang, L.J. Fu, H. Liu, Y.P. Wu, E. Rahm, R. Holze, H.Q. Wu, Electrochim. Acta, 2006, 51, 3872-3883).

L'ajout d'additifs de type ignifuge (retardateur de flammes) dans des électrolytes a fait l'objet de recherches par différents groupes (par exemple, voir Doughty, D.H. et al., 2005, J. Power Source, 146, 116-120). Ces additifs pourraient réduire le risque d'incendie d'une batterie lors d'un emballement thermique. Le mécanisme d'action de ces additifs ignifuges réside principalement dans le piégeage chimique des radicaux libres H^{•} ou OH^{•} dégagés lors de la combustion de la batterie (A. Granzow, Acc. of Chem. Res., 1978, 11, 177-183). Les additifs ignifuges à base de phosphate sont les plus utilisés, et améliorent la stabilité thermique de la batterie. Cependant, ces additifs doivent être ajoutés en très faible concentration, car la réduction de l'inflammabilité des électrolytes par ceux-ci s'accompagne d'une réduction de la performance, causée en partie par la viscosité élevée de l'électrolyte comprenant l'additif (X.L. Yao, et al., J. Power Sources, 2005, 144, 170-175).

La stabilité thermique du séparateur de la batterie joue également un rôle très important dans la réaction d'emballement thermique. En effet, lors de la fusion du séparateur, un court-circuit se produit, augmentant ainsi le risque de réactions en chaîne. Différentes stratégies ont été adoptées pour augmenter sa stabilité, comme le remplacement du séparateur traditionnellement en polyéthylène ou polypropylène par du polyimide. Cependant, la méthode de synthèse de ce type de polymère est difficilement applicable à l'échelle industrielle (C. Shi, et al., J. Power Sources, 2015, 298, 158-165). Il a été démontré qu'il était également possible d'intégrer un additif retardateur de flammes dans un séparateur polymérique (voir K. Liu, et al., Science Advances, 2017, 3, e1601978, 1-8). Toutefois, pour que le retardateur de flamme présent dans le polymère soit libéré, le séparateur doit avoir fondu, impliquant alors un risque supplémentaire de court-circuit.

La publication US2013/302702 décrit un séparateur comprenant de la cellulose modifiée par des groupements organophosphorés liés de façon covalente directement sur celle-ci.

La référence Vilela C. et al. (Cellulose, 2016, 23(6), 3677-3689) réfère à un séparateur à protons pour utilisation dans des piles à combustion comprenant des fibres de cellulose et un polymère phosphoré qui est réticulé en présence des celles-ci.

Il existe donc un besoin pour de nouvelles méthodes d'incorporation de retardateur de flamme dans une batterie et/ou de nouveaux séparateurs n'incluant pas au moins l'un des désavantages des séparateurs courants.

### SOMMAIRE

Selon un premier aspect, le présent document concerne un séparateur pour cellule électrochimique comprenant des fibres de cellulose, modifiées ou non, et un retardateur de flamme, dans lequel le retardateur de flamme comprend un groupement organophosphoré, une chaîne polymérique phosphorée, ou une de leurs combinaisons, le retardateur de flamme étant fixé sur un support par une ou des liaison(s) covalente(s), le support étant intégré à la porosité des fibres de cellulose et/ou fixé sur les fibres de cellulose par des interactions intermoléculaires électrostatiques et/ou par des liaisons hydrogènes, dans lequel le support est sous forme de particules formées d'un matériau électrochimiquement inerte et non conducteur électronique. Selon un mode de réalisation, les fibres de cellulose comprennent des fibres de cellulose naturelle, de cellulose modifiée ou une combinaison. Par exemple, la cellulose est naturelle. La cellulose peut aussi être une cellulose modifiée, par exemple comprenant des groupements hydrophiles ou, alternativement, des groupements hydrophobes.

Selon un mode de réalisation, la taille moyenne des fibres de cellulose se situe entre 5 nm et 5 mm, ou entre 500 nm et 3 mm, ou entre 1 µm et 3 mm, entre 100 µm et 3 mm, ou entre 250 µm et 3 mm. Selon un exemple, la taille moyenne des fibres de cellulose se situe entre 750 µm et 2,5 mm, ou entre 1 mm et 2,5 mm, ou entre 0.5 mm et 3 mm, ou encore entre 1 mm et 3 mm. Selon un autre exemple, la taille moyenne des fibres de cellulose se situe entre 5 nm et 500 µm, ou entre 50 nm et 100 µm, ou entre 250 nm et 50 µm, ou entre 250 nm et 10 µm.

Selon un mode de réalisation ne faisant pas partie de l'objet de l'invention revendiquée, le séparateur est tel que défini ci-dessus et le retardateur de flamme comprend un groupement organique halogéné, une chaîne polymérique halogénée, un groupement organique azoté, une chaîne polymérique azotée, un composé inorganique, ou une de leurs combinaisons.

Par exemple, selon ce un mode de réalisation ne faisant pas partie de l'objet de l'invention revendiquée, le retardateur de flamme peut être trappé à l'intérieur des fibres de cellulose et/ou fixé sur les fibres de cellulose par des interactions intermoléculaires électrostatiques et/ou par des liaisons hydrogènes. Dans un mode réalisation, le retardateur de flamme est un composé inorganique, par exemple, un oxyde complexe, un oxyde, un hydroxyde, un silicate, un borate ou un phosphate de métal (tels que Mg, Sb, Al, Zn, Ca, et autres), par exemple un borate d'un métal alcalin ou alcalinoterreux (tel que Na₂O·2B₂O₃, xMgO·yB₂O₃·zH₂O, Mg₂B₂O₅, etc.) ou un borate d'un métal de transition (comme un borate de Zn, Al, Ag, Fe, Cu, Ni, Sr, Pb, ou Zr). Selon un mode de réalisation, le retardateur de flamme est sous forme de particules.

Le retardateur de flamme utilisé dans le cadre de la présente invention est fixé sur un support par une ou des liaison(s) covalente(s), le support étant intégré à la porosité des fibres de cellulose et/ou fixé sur les fibres de cellulose par des interactions intermoléculaires électrostatiques et/ou par des liaisons hydrogènes. Le support est sous forme de particules formées d'un matériau électrochimiquement inerte et non conducteur électronique. Par exemple, le matériau électrochimiquement inerte est choisi parmi un composé inorganique (tel qu'un oxyde métallique ou non métallique ou une céramique) ou un polymère, de préférence le matériau électrochimiquement inerte est conducteur ionique. Par exemple, le matériau électrochimiquement inerte comprend un composé inorganique (tel que Al₂O₃, ZrO₂, Cr₂O₃, TiO₂, CeO₂, Fe₂O₃, B₂O, ou SiO₂).

Le retardateur de flamme utilisé dans le cadre de la présente invention est choisi parmi un groupement organophosphoré, une chaîne polymérique phosphorée, ou une de leurs combinaisons. Selon un exemple, le retardateur de flamme est un groupement organophosphoré ou une chaîne polymérique phosphorée, de préférence comprenant un groupement ester phosphate ou phosphonate lié au support par un groupement choisi parmi un groupement alkylène, alcénylène, arylène, éther, ester, carbonate, carbamate, amine, amide, diazonium, triazène, silane, et une combinaison d'au moins deux de ceux-ci.

Selon un mode de réalisation, le groupement organophosphoré ou la chaîne polymérique phosphorée est de Formule I : 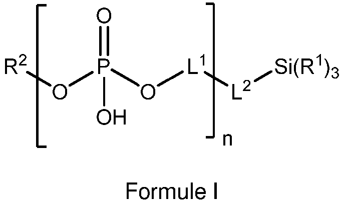 dans laquelle,
L¹ est, indépendamment à chaque occurrence, choisi parmi alkylène, alkylèneoxycarbonylalkylène, et alkylènecarbonyloxyalkylène;
L² est choisi parmi un alkylène, alkylèneoxy (lié à l'atome de silicium par un atome d'oxygène), oxyalkylène (lié à l'atome de silicium par un atome de carbone), oxyalkylèneoxy, alkylèneoxycarbonylalkylène, alkylènecarbonyloxyalkylène, oxyalkylèneoxycarbonylalkylène, et oxyalkylènecarbonyloxyalkylène;
R¹ est, indépendamment à chaque occurrence, un groupement OH, Cl, C₁₋₆alkyle, OC₁₋₆alkyle, ou un lien covalent entre l'atome de silicium et l'atome d'oxygène du support, et où au moins un R¹ est un tel lien covalent;
R² est H, C₁₋₆alkyle, ou un groupement -L¹-L²-Si(R¹)₃; et
n est un nombre entier choisi parmi les nombres de 1 à 2000, par exemple, de 1 à 1000, ou de 1 à 500, ou de 1 à 100, ou de 1 à 50, ou de 1 à 10.

Selon un exemple, le groupement organophosphoré ou la chaîne polymérique phosphorée est de Formule II : 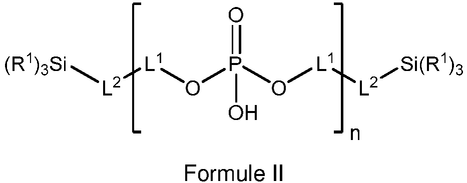 dans laquelle L¹, L², R¹ et n sont tels que définis ci-dessus.

Selon un mode de réalisation, l'alkylène compris dans les groupes L¹ alkylène, alkylèneoxycarbonylalkylène, ou alkylènecarbonyloxyalkylène des Formules I et II comprend de 1 à 4 atomes de carbone, ou de 2 à 4 atomes de carbone, ou encore 2 ou 3 atomes de carbone.

Selon un autre mode de réalisation, l'alkylène compris dans les groupes L² alkylène, alkylèneoxy, oxyalkylène, oxyalkylèneoxy, alkylèneoxycarbonylalkylène, alkylènecarbonyloxyalkylène, oxyalkylèneoxycarbonylalkylène, ou oxyalkylènecarbonyloxyalkylène des Formules I et II comprend de 1 à 4 atomes de carbone, ou de 2 à 4 atomes de carbone, ou encore 2 ou 3 atomes de carbone.

Selon un autre exemple, le groupement organophosphoré ou la chaîne polymérique phosphorée est de Formule III: 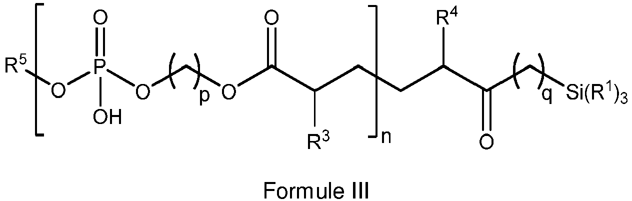 dans laquelle,
R¹ et n sont tels que définis ci-dessus;
R³ et R⁴ sont, indépendamment à chaque occurrence, un atome d'hydrogène ou un groupement C₁₋₃alkyle;
R⁵ est H, C₁₋₆alkyle, ou un groupement -(CH₂)ₚOC(O)CH(R³)CH₂CH₂CH(R⁴) (CH₂)_{q}-Si(R¹)₃;
p est un nombre entier indépendamment à chaque occurrence choisie parmi les nombres de 2 à 4; et
q est un nombre entier indépendamment à chaque occurrence choisie parmi les nombres de 1 à 4.

Selon encore un autre exemple, le groupement organophosphoré ou la chaîne polymérique phosphorée est de Formule IV : 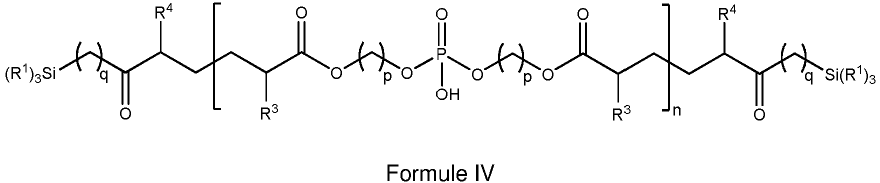 dans laquelle R¹, R³, R⁴, n, p et q sont tels que définis ci-dessus.

Dans un mode de réalisation des Formules III et IV, p est un nombre entier choisi parmi les nombres de 2 et 3, de préférence 2. Dans un autre mode de réalisation des Formules III et IV, q est un nombre entier choisi parmi les nombres de 2 à 4, de préférence 2 ou 3.

Dans un mode de réalisation des Formules III et IV, R³ est un hydrogène ou un méthyle, de préférence un méthyle. Dans un autre mode réalisation des Formules III et IV, R⁴ est un hydrogène ou un méthyle, de préférence un méthyle.

Selon un mode de réalisation des Formules I à IV, R¹ est un lien covalent entre l'atome de silicium et l'atome d'oxygène du support à au moins une occurrence. Selon un autre mode de réalisation des Formules I à IV, R¹ est un lien covalent avec le support à au moins trois occurrences. Par exemple, R¹ peut être un lien covalent avec le support à chaque occurrence.

Selon un autre aspect, le présent document décrit une composante séparateur-électrolyte comprenant un séparateur tel qu'ici défini et un électrolyte comprenant au moins un élément choisi parmi un sel, un solvant polaire, aprotique et non-aqueux, un liquide ionique, et un polymère.

Dans un mode de réalisation, la composante séparateur-électrolyte comprend un solvant polaire, aprotique et non-aqueux, par exemple, choisi parmi les carbonates cycliques (carbonate d'éthylène (EC), carbonate de propylène (PC), carbonate de butylène (BC), carbonate de vinylène (VC), et leurs dérivés); les carbonates acycliques (carbonate de diméthyle (DMC), carbonate de diéthyle (DEC), carbonate d'éthyle et méthyle (EMC), carbonate de dipropyle (DPC), et leurs dérivés); les lactones (γ-butyrolactone (γ-BL) et γ-valérolactone (γ-VL)); les éthers acycliques (1,2-diméthoxyéthane (DME), 1,2-diéthoxyéthane (DEE), éthoxyméthoxyéthane (EME), triméthoxyméthane, etc.); les éthers cycliques (tétrahydrofurane, 2-méthyltétrahydrofurane, 1,3-dioxolane, et leurs dérivés); les amides (formamide, acétamide, diméthylformamide), les nitriles (acétonitrile, propylnitrile), nitrométhane, triester d'acide phosphorique, diméthylsulfoxyde (DMSO), sulfolane, méthylsulfolane, et leurs mélanges.

Selon un autre mode de réalisation, la composante séparateur-électrolyte comprend un sel d'un métal alcalin ou alcalinoterreux, par exemple, un sel de lithium, de préférence choisi parmi l'hexafluorophosphate de lithium (LiPF₆), le bis(trifluorométhanesulfonyl)imidure de lithium (LiTFSI), le bis(fluorosulfonyl)imidure de lithium (LiFSI), le 2-trifluorométhyl-4,5-dicyano-imidazolate de lithium (LiTDI), le 4,5-dicyano-1,2,3-triazolate de lithium (LiDCTA), le bis(pentafluoroéthylsulfonyl)imidure de lithium (LiBETI), le tétrafluoroborate de lithium (LiBF₄), le bis(oxalato)borate de lithium (LiBOB), le nitrate de lithium (LiNO₃), le chlorure de lithium (LiCl), le bromure de lithium (LiBr), le fluorure de lithium (LiF), le perchlorate de lithium (LiClO₄), l'hexafluoroarsénate de lithium (LiAsF₆), le trifluorométhanesulfonate de lithium (LiSO₃CF₃) (LiTf), le fluoroalkylphosphate de lithium Li[PF₃(CF₂CF₃)₃] (LiFAP), le tétrakis(trifluoroacétoxy)borate de lithium Li[B(OCOCF₃)₄] (LiTFAB), le bis(1,2-benzenediolato(2-)-O,O')borate de lithium Li[B(C₆O₂)₂] (LBBB), ou une combinaison de ceux-ci.

Selon un autre mode de réalisation, la composante séparateur-électrolyte comprend un polymère. Selon encore un autre mode de réalisation, la composante séparateur-électrolyte comprend un liquide ionique.

Selon un autre aspect, le présent document concerne une cellule électrochimique comprenant une électrode négative, une électrode positive, un électrolyte et un séparateur tel qu'ici défini. Alternativement, le présent document concerne une cellule électrochimique comprenant une électrode négative, une électrode positive et une composante séparateur-électrolyte telle qu'ici définie.

Selon un mode de réalisation, l'électrode positive comprend un matériau électrochimiquement actif d'électrode positive, éventuellement un liant, et éventuellement un matériau conducteur électronique. Par exemple, le matériau électrochimiquement actif d'électrode positive peut être choisi parmi les phosphates de métaux, les phosphates de métaux lithiés, les oxydes de métaux, et les oxydes de métaux lithiés.

Selon un autre mode de réalisation, lequel l'électrode négative comprend un matériau électrochimiquement actif d'électrode négative, par exemple, choisi parmi les métaux alcalins et alcalinoterreux et les alliages les comprenant (par exemple, lithium, sodium, potassium), le graphite et autres sources de carbone (carbone poreux, nanotubes de carbone, etc.), les oxydes de métaux et oxydes de métaux lithiés (tels que titanate de lithium, oxyde de vanadium, oxyde de vanadium lithié, etc.), et les matériaux organiques d'anode (tels que le pérylène-3,4,9,10-tétracarboxylate de tetra-lithium (PTCLi₄), dianhydride naphthalène-1,4,5,8-tétracarboxylique (NTCDA), dianhydride pérylène-3,4,9,10-tétracarboxylique (PTCDA), dicarboxylates π-conjugués, et anthraquinone).

Le présent document décrit aussi à un accumulateur électrochimique comprenant au moins une cellule électrochimique telle que définie dans le présent document, par exemple, l'accumulateur électrochimique peut être choisi parmi une batterie au lithium ou lithium-ion, une batterie au sodium ou sodium-ion, une batterie au potassium ou potassium-ion.

Selon un mode de réalisation ne faisant pas partie de l'objet de l'invention revendiquée, le présent document décrit aussi un matériau comprenant un retardateur de flamme fixé de façon covalente sur un support, le support étant sous forme de particules. Par exemple, les particules sont formées d'un matériau électrochimiquement inerte et non conducteur électronique. Selon un mode de réalisation, le matériau électrochimiquement inerte est choisi parmi un composé inorganique, une céramique et un polymère, de préférence le matériau électrochimiquement inerte est conducteur ionique. Selon un exemple, le matériau électrochimiquement inerte comprend un composé inorganique (tel que Al₂O₃, ZrO₂, Cr₂O₃, TiO₂, CeO₂, Fe₂O₃, B₂O, ou SiO₂).

Selon un mode de réalisation du matériau ne faisant pas partie de l'objet de l'invention revendiquée, le retardateur de flamme est choisi parmi un groupement organique halogéné, une chaîne polymérique halogénée, un groupement organophosphoré, une chaîne polymérique phosphorée, un groupement organique azoté, ou une chaîne polymérique azotée. Selon un exemple, le retardateur de flamme est un groupement organique halogéné choisi parmi les groupements aryles substitués d'atomes de chlore et/ou de brome (tels que 2,5-dichlorophényle, 2,4,6-tribromophényle, etc.). Selon un autre exemple, le retardateur de flamme est un groupement organophosphoré ou une chaîne polymérique phosphorée, par exemple, comprenant un groupement ester phosphate ou phosphonate lié au support par au moins un groupement alkylène, alcénylène, arylène, éther, ester, carbonate, carbamate, amine, amide, diazonium, triazène, silane, ou une combinaison d'au moins deux de ceux-ci.

Selon un mode de réalisation du matériau ne faisant pas partie de l'objet de l'invention revendiquée, le groupement organophosphoré ou chaîne polymérique phosphorée peut être de Formule I : 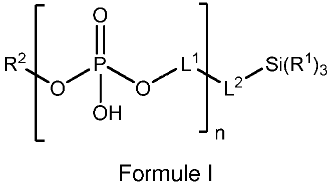 dans laquelle,
L¹ est, indépendamment à chaque occurrence, choisi parmi un alkylène, alkylèneoxycarbonylalkylène, et alkylènecarbonyloxyalkylène;
L² est choisi parmi un alkylène, alkylèneoxy (lié à l'atome de silicium par un atome d'oxygène), oxyalkylène (lié à l'atome de silicium par un atome de carbone), oxyalkylèneoxy, alkylèneoxycarbonylalkylène, alkylènecarbonyloxyalkylène, oxyalkylèneoxycarbonylalkylène, et oxyalkylènecarbonyloxyalkylène;
R¹ est, indépendamment à chaque occurrence, un groupement OH, Cl, C₁₋₆alkyle, OC₁₋₆alkyle, ou un lien covalent entre l'atome de silicium et l'atome d'oxygène du support, et où au moins un R¹ est un tel lien covalent;
R² est H, C₁₋₆alkyle, ou un groupement -L¹-L²-Si(R¹)₃; et
n est un nombre entier choisi parmi les nombres de 1 à 2000, par exemple, de 1 à 1000, ou de 1 à 500, ou de 1 à 100, ou de 1 à 50, ou de 1 à 10.

Selon un exemple du matériau ne faisant pas partie de l'objet de l'invention revendiquée, le groupement organophosphoré ou chaîne polymérique phosphorée est de Formule II : 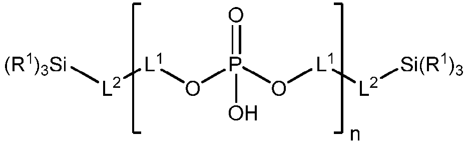 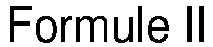 dans laquelle L¹, L², R¹ et n sont tels que définis ci-dessus.

Dans les Formules I et II, l'alkylène compris dans les groupes L¹ alkylène, alkylèneoxycarbonylalkylène, ou alkylènecarbonyloxyalkylène peut comprendre de 1 à 4 atomes de carbone, ou de 2 à 4 atomes de carbone, ou encore 2 ou 3 atomes de carbone.

De façon Similaire, dans les Formules I et II, l'alkylène compris dans les groupes L² alkylène, alkylèneoxy, oxyalkylène, oxyalkylèneoxy, alkylèneoxycarbonylalkylène, alkylènecarbonyloxyalkylène, oxyalkylèneoxycarbonylalkylène, ou oxyalkylènecarbonyloxyalkylène peut comprendre de 1 à 4 atomes de carbone, ou de 2 à 4 atomes de carbone, ou encore 2 ou 3 atomes de carbone.

Selon un autre exemple du matériau ne faisant pas partie de l'objet de l'invention revendiquée, le groupement organophosphoré ou chaîne polymérique phosphorée est de Formule III : 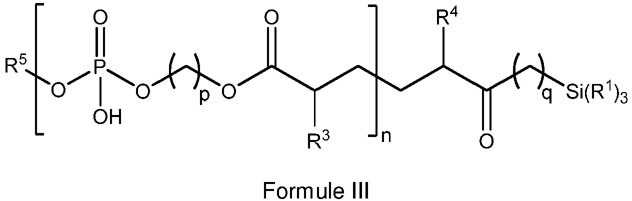 dans laquelle,
R¹ et n sont tels que définis ci-dessus;
R³ et R⁴ sont, indépendamment à chaque occurrence un atome d'hydrogène ou un groupement C₁₋₃alkyle;
R⁵ est H, C₁₋₆alkyle, ou un groupement -(CH₂)ₚOC(O)CH(R³)CH₂CH₂CH(R⁴) (CH₂)_{q}-Si(R¹)₃;
p est un nombre entier indépendamment à chaque occurrence choisie parmi les nombres de 2 à 4; et
q est un nombre entier indépendamment à chaque occurrence choisie parmi les nombres de 1 à 4.

Selon encore un autre exemple du matériau ne faisant pas partie de l'objet de l'invention revendiquée, le groupement organophosphoré ou chaîne polymérique phosphorée est de Formule IV : 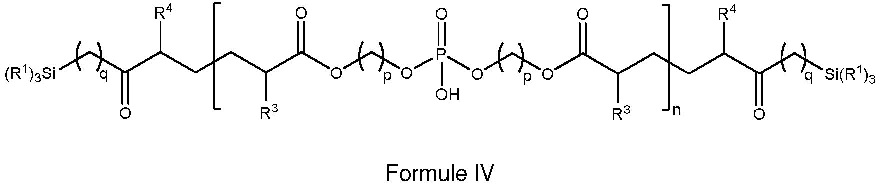 dans laquelle R¹, R³, R⁴, n, p et q sont tels que définis ci-dessus.

Dans un mode de réalisation des Formules III et IV du matériau ne faisant pas partie de l'objet de l'invention revendiquée, p est un nombre entier choisi parmi les nombres de 2 et 3, de préférence 2. Dans un autre mode de réalisation des Formules III et IV, q est un nombre entier choisi parmi les nombres de 2 à 4, de préférence 2 ou 3.

Dans un mode de réalisation des Formules III et IV du matériau ne faisant pas partie de l'objet de l'invention revendiquée, R³ est un hydrogène ou un méthyle, de préférence un méthyle. Dans un autre mode réalisation des Formules III et IV, R⁴ est un hydrogène ou un méthyle, de préférence un méthyle.

Selon un mode de réalisation des Formules I à IV du matériau ne faisant pas partie de l'objet de l'invention revendiquée, R¹ est un lien covalent avec le support à au moins trois occurrences. Par exemple, R¹ peut être un lien covalent avec le support à chaque occurrence.

### BRÈVE DESCRIPTION DES FIGURES

La Figure 1 illustre schématiquement un mode de réalisation du procédé de fabrication tel qu'ici décrit.
La Figure 2 présente les spectres infrarouges des poudres (a) d'Al₂O₃-phenyl-2,5-dichloro et Al₂O₃; (b) d'Al₂O₃-phenyl-2,4,6-tribromo et Al₂O₃, (c) d'Al₂O₃-polyacrylatephosphate et Al₂O₃; et (d) d'Al₂O₃-polyacrylatephosphate (agrandissement).
La Figure 3 présente les courbes thermogravimétriques des poudres de (a) Al₂O₃, Al₂O₃-phenyl-2,5-dichloro, Al₂O₃-phenyl-2,4,6-tribromo et Al₂O₃-silaneacrylate; puis (b) Al₂O₃ et Al₂O₃-polyacrylatephosphate.
La Figure 4 montre des images au microscope électronique à balayage de la poudre d'Al₂O₃-polyacrylatephosphate avec sa cartographie chimique correspondante : carbone, oxygène, aluminium et phosphore.
La Figure 5 présente les spectres XPS de survol (gauche) et de cœur (droite) des poudres de (a) Al₂O₃ et (b) Al₂O₃-phenyl-2,5-dichloro.
La Figure 6 présente (a) le spectre de diffraction des rayons X et (b) l'image au microscope électronique à balayage de la poudre de Mg₂B₂O₅.
La Figure 7 présente les photographies des séparateurs (a) Celgard^{®}-3501 (à gauche), (b) cellulose (au centre), et (c) cellulose + Mg₂B₂O₅ (à droite) prises à des températures de 25°C, 50°C, 75°C, 100°C, 125°C, 150°C, et 175°C.
La Figure 8 montre les courbes thermogravimétriques des différents films de cellulose contenant ou non des céramiques.
La Figure 9 présente les images MEB aux grossissements x20 (à gauche) et x50 (à droite) des séparateurs de cellulose (en haut) et cellulose + Mg₂B₂O₅ (en bas).
La Figure 10 présente les images MEB aux grossissements x5000 (à gauche) et x150 (à droite) du séparateur de cellulose + Mg₂B₂O₅. L'image en couleur (en bas à droite) met en évidence la porosité (rouge = proche; bleu = loin).
La Figure 11 montre les images MEB (a) du séparateur de cellulose + Mg₂B₂O₅ et sa cartographie chimique correspondante : (a) oxygène, (a) carbone, et (a) magnésium.
La Figure 12 présente les images MEB à un grossissement de x50 des deux côtés (céramique et cellulose) du séparateur de cellulose + Al₂O₃-phenyl-2,5-dichloro. Les images en couleur (droite) mettent en évidence la porosité (rouge = proche; bleu = loin).
La Figure 13 présente les images MEB aux grossissements x1000 et x2800 des deux côtés (céramique et cellulose) du séparateur de cellulose + Al₂O₃-phenyl-2,5-dichloro.
La Figure 14 montre les voltammogrammes cycliques entre 2 et 5 V vs Li/Li⁺ d'une électrode en acier inoxydable et des films de cellulose, cellulose + nanocellulose et cellulose + nanocellulose + Mg₂B₂O₅.
La Figure 15 présente (a) les cyclages galvanostatiques en C/10 entre 3 et 4.4 V et (b) les courbes de charge/décharge de batteries NMC/graphite assemblées avec différents séparateurs.
La Figure 16 montre les diagrammes de Nyquist enregistrés à 3 V après (a) le premier et (b) le 100^{e} cycle de charge/décharge en C/10 de batteries NMC/graphite assemblées avec différents séparateurs.
La Figure 17 présente (a) les cyclages galvanostatiques en C/10 entre 3 et 4.4 V, et (b) les courbes de charge/décharge de batteries NMC/graphite assemblées avec différents séparateurs.
La Figure 18 présente les diagrammes de Nyquist enregistrés à 3 V après (a) le premier et (b) le 100^{e} cycle de charge/décharge en C/10 de batteries NMC/graphite assemblées avec différents séparateurs.
La Figure 19 présente les photographies d'un séparateur Celgard^{®}-3501 à l'allumage (gauche), après 0,5 secondes (centre), et après 2 secondes (droite).
La Figure 20 présente les photographies d'un séparateur de cellulose au premier allumage (en haut à gauche), après 1 seconde (en haut à droite), au deuxième allumage (en bas à gauche), après 1 seconde (en bas au centre), et après 3 secondes (en bas à droite).
La Figure 21 présente les photographies d'un séparateur de cellulose avec Mg₂B₂O₅ au premier allumage (en haut à gauche), après 2 secondes (en haut à droite), au deuxième allumage (en bas à gauche), après 2 secondes (en bas au centre), et après 4 secondes (en bas à droite).
La Figure 22 présente les photographies d'un séparateur de cellulose avec Al₂O₃ au premier allumage (en haut à gauche), après 2 secondes (en haut au centre), au deuxième allumage (en haut à droite), après 3 secondes (en bas à gauche), après 6 secondes (en bas au centre), et après 8 secondes (en bas à droite).
La Figure 23 présente les photographies d'un séparateur de cellulose avec Al₂O₃-phenyl-2,5-dichloro au premier allumage (en haut à gauche), après 2 secondes (en haut à droite), au deuxième allumage (au centre à gauche), après 2 secondes (au centre à droite), au troisième allumage (en bas à gauche), et après 2 secondes (en bas à droite).
La Figure 24 présente les photographies d'un séparateur de cellulose avec Al₂O₃-polyacrylatephosphate au premier allumage (en haut à gauche), après 2 secondes (en haut, 2^{e} image), au deuxième allumage (en haut 3^{e} image), après 2 secondes (en haut à droite), au troisième allumage (en bas à gauche), après 4 secondes (en bas, 2^{e} image), après 8 secondes (en bas 3^{e} image), et après 14 secondes (en bas à droite).

### DESCRIPTION DÉTAILLÉE

Tous les termes et expressions techniques et scientifiques utilisés ici ont la même signification que celle généralement comprise par la personne versée dans l'art de la présente technologie. La définition de certains termes et expressions utilisés est néanmoins fournie ci-dessous.

Le terme « environ » tel qu'utilisé dans le présent document signifie approximativement, dans la région de, et autour de. Lorsque le terme « environ » est utilisé en lien avec une valeur numérique, il la modifie, par exemple, au-dessus et en dessous par une variation de 10% par rapport à la valeur nominale. Ce terme peut aussi tenir compte, par exemple, de l'erreur expérimentale d'un appareil de mesure ou de l'arrondissement d'une valeur.

Lorsqu'un intervalle de valeurs est mentionné dans la présente demande, les bornes inférieures et supérieures de l'intervalle sont, à moins d'indication contraire, toujours incluses dans la définition.

Les structures chimiques décrites ici sont dessinées suivant les conventions du domaine. Aussi, lorsqu'un atome, comme un atome de carbone, tel que dessiné semble inclure une valence incomplète, alors on assumera que la valence est satisfaite par un ou plusieurs atomes d'hydrogène même s'ils ne sont pas explicitement dessinés.

Tel qu'ici utilisé, le terme « alkyle » réfère à des groupements hydrocarbures saturés ayant de 1 à 21 atomes de carbone, incluant les groupes alkyles linéaires ou ramifiés. Des exemples non limitatifs d'alkyles peuvent comprendre les groupes méthyle, éthyle, propyle, butyle, pentyle, hexyle, heptyle, octyle, nonyle, décyle, isopropyle, tert-butyle, sec-butyle, isobutyle et analogues. De façon similaire, un groupement « alkylène » désigne un groupement alkyle situé entre deux autres groupements. Des exemples de groupements alkylènes comprennent les groupes méthylène, éthylène, propylène, etc. Les groupements alkyle et alkylène peuvent être non substitués ou substitués par un ou plusieurs substituents, par exemple, halogène (ex. : fluor, chlore), hydroxyle, alcoxyle, nitrile, etc. Les termes « C₁-Cₙalkyle » et « C₁-Cₙalkylène » se réfèrent à un groupe alkyle ayant de 1 au nombre « n » indiqué d'atomes de carbone.

Tel qu'ici utilisé, le terme « alcényle » réfère à des hydrocarbures insaturés incluant au moins une double liaison entre deux atomes de carbone. Des exemples non limitatifs de groupements alcényles comprennent les groupes vinyle, allyle, 1-propén-2-yle, 1-butén-3-yle, 1-butén-4-yle, 2-butén-4-yle, 1-pentén-5-yle, 1,3-pentadién-5-yle, etc. De façon similaire, un groupement « alcénylène » désigne un groupement alcényle situé entre deux autres groupements. Des exemples de groupements alcénylènes comprennent les groupes vinylène (éthénylène), propénylène, etc. Les groupements alcényle et alcénylène peuvent être non substitués ou substitués par un ou plusieurs substituents, par exemple, halogène (tel que fluor, chlore), hydroxyle, alcoxyle, nitrile, etc. Les termes « C₂-Cₙ, alcényle » et « C₂-Cₙ alcénylène » se réfèrent à un groupe alcényle ayant de 2 au nombre "n" indiqué d'atomes de carbone.

Les expressions « électrochimiquement inerte » ou « non actif électrochimiquement » telles qu'utilisées ici se rapportent à une propriété d'un matériau selon laquelle ce matériau ne participera pas à une réaction d'oxydo-réduction d'une cellule électrochimique dans les conditions propres aux matériaux d'électrodes qu'elle contient et à son utilisation (conditions normales de charge/décharge).

L'expression « non conducteur électronique » tel qu'utilisé ici désigne un matériau qui ne conduit pas les électrons de façon significative dans les conditions d'utilisation. Par exemple, le matériau n'est pas semi-conducteur ou conducteur électronique et possède une conductivité de 10⁻³ S/m ou moins.

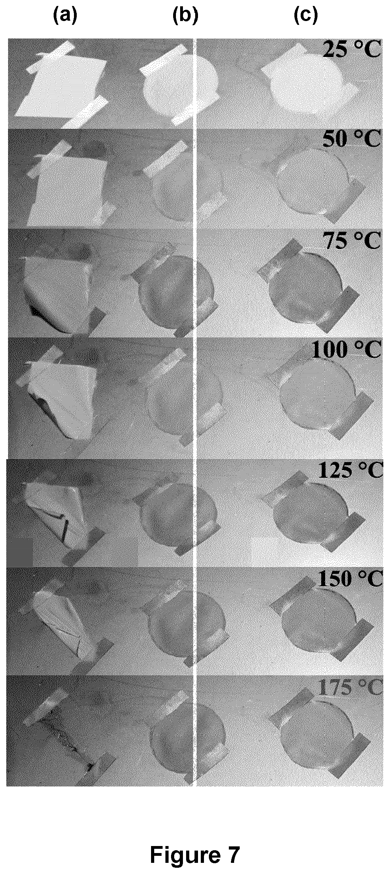

Afin de pallier aux problèmes décrits plus haut, il est ici proposé, par exemple, de greffer des retardateurs de flammes (par exemple, à base d'halogène ou de phosphore) sur des céramiques (ici Al₂O₃) et d'incorporer celles-ci dans la porosité de séparateurs en cellulose qui sont bien plus stables thermiquement que les séparateurs industriels en polyéthylène ou polypropylène (ex. Celgard^{®}-3501, voir Figure 7). Alternativement, une céramique en forme de bâtonnets (par exemple, Mg₂B₂O₅) et ayant des propriétés retardatrices de flammes est aussi proposée.

Le présent document présente donc un séparateur pour cellule électrochimique comprenant des fibres de cellulose et un retardateur de flamme, dans lequel le retardateur de flamme comprend un groupement organophosphoré, une chaîne polymérique phosphorée, ou une de leurs combinaisons, le retardateur de flamme étant fixé sur un support par une ou des liaison(s) covalente(s), le support étant intégré à la porosité des fibres de cellulose et/ou fixé sur les fibres de cellulose par des interactions intermoléculaires électrostatiques et/ou par des liaisons hydrogènes, dans lequel le support est sous forme de particules formées d'un matériau électrochimiquement inerte et non conducteur électronique. La cellulose est formée de macromolécules principalement constituées de chaînes linéaires de molécules de D-glucose comprenant plusieurs groupements hydroxyles. Ce biopolymère est le principal constituant de la paroi des cellules végétales.

Les fibres de cellulose formant le présent séparateur peuvent comprendre des fibres de cellulose naturelle, de cellulose modifiée ou une combinaison des deux. Ces fibres peuvent être tissées ou non, de préférence non tissées.

La cellulose naturelle est généralement d'origine végétale, par exemple, provenant d'arbres ou d'une autre plante (tel que le coton). Certains champignons filamenteux et certaines bactéries peuvent aussi produire la cellulose. La cellulose naturelle peut aussi être non traitée ou être préalablement traitée (par exemple blanchie, traitée au sulfate d'aluminium, etc.).

La cellulose modifiée comprend des groupements fixés sur les hydroxyles de ces monomères de cellulose. En d'autres mots, au moins une partie des groupements -OH de la cellulose deviennent -OR, où R forme un groupe ester, éther, ester phosphate ou phosphonate, ester sulfate ou sulfonate, carbonate, carbamate, etc. Ces groupements peuvent être de nature hydrophile, comprenant par exemple des groupes carboxyles, hydroxyles, ou autres, ou hydrophobe, tels que les groupes comprenant des chaînes alkyles, selon les besoins et la compatibilité avec les autres éléments de la cellule électrochimique. Des exemples de celluloses modifiées incluent l'acétate de cellulose, le phthalate de cellulose, et autres esters de cellulose, la cellulose cyanométhylée, la cellulose d'éthyle, la cellulose d'hydroxypropyle ou hydroxyéthyle, les celluloses modifiées avec de l'acide acrylique et/ou de l'alcool polyvinylique, et autres celluloses modifiées. Il est entendu que les celluloses modifiées pouvant être utilisées dans la présente technologie doivent permettre la formation d'un film constitué de fibres de cellulose.

La taille moyenne des fibres de cellulose peut être millimétrique, micrométrique ou nanométrique. Par exemple, la taille moyenne peut varier entre 5 nm et 5 mm, ou entre 500 nm et 3 mm, ou entre 1 µm et 3 mm, entre 100 µm et 3 mm, ou entre 250 µm et 3 mm. Par exemple, des fibres de taille millimétrique ou haut micrométrique peuvent avoir une taille moyenne variant entre 750 µm et 2,5 mm, ou entre 1 mm et 2,5 mm, ou entre 0.5 mm et 3 mm, ou encore entre 1 mm et 3 mm. D'un autre côté, la taille moyenne de fibres nanométriques ou bas micrométriques peut varier d'entre 5 nm et 500 µm, ou entre 50 nm et 100 µm, ou entre 250 nm et 50 µm, ou entre 250 nm et 10 µm. La cellulose peut aussi comprendre un mélange de fibres de taille millimétrique et de fibres de taille nanométrique et/ou micrométrique.

Le retardateur de flamme est choisi parmi les composés organophosphorés, polymères phosphorés, et leurs combinaisons possédant des propriétés de retardateur de flamme. Le retardateur de flamme est lié de façon covalente à un support, sous forme de particules, lequel étant intégré à la porosité des fibres et/ou lié aux fibres de cellulose par des interactions de type électrostatique ou ponts hydrogène.

Selon un mode de réalisation ne faisant pas partie de l'objet de l'invention revendiquée, le retardateur de flamme comprend des composés inorganiques possédant ce type de propriété et étant électrochimiquement inerte dans les conditions prévues d'utilisation. Par exemple, le composé inorganique peut être un oxyde complexe, un oxyde, un hydroxyde, un silicate, un borate ou un phosphate de métal (tels que Mg, Sb, Al, Zn, Ca, et autres) non actif électrochimiquement dans les conditions prévues d'utilisation et possédant des propriétés retardatrices de flamme. Le composé peut aussi être basé de façon générale sur le bore, par exemple, basé sur l'acide borique ou l'oxyde borique. Des exemples de composés inorganiques basés sur le bore comprennent un borate d'un métal alcalin ou alcalinoterreux, hydraté ou non, par exemple, Na₂O·2B₂O₃, xMgO·yB₂O₃·zH₂O, Mg₂B₂O₅, etc. ou les borates de métaux de transition tels que Zn, Al, Ag, Fe, Cu, Ni, Sr, Pb, Zr. Le composé inorganique sera généralement sous forme de particules (de toute forme, incluant substantiellement rondes, en bâtonnets, en aiguilles, en feuillets, etc.). Le retardateur est alors au moins en partie trappé dans les fibres de cellulose et peut aussi être fixé aux fibres par des interactions plus ou moins fortes de types électrostatiques ou ponts hydrogènes.

Le retardateur utilisé dans le cadre de la présente invention est fixé de façon covalente à un support, sous forme de particules, le support étant électrochimiquement inerte dans les conditions prévues d'utilisation. Ce support est aussi de préférence conducteur ionique ou non nuisible à la conduction ionique. Ce support est alors, au moins en partie, intégré à la porosité des fibres de cellulose et/ou fixé sur les fibres de cellulose par des interactions intermoléculaires électrostatiques et/ou par des liaisons hydrogènes. Le support peut aussi se retrouver en plus grande concentration d'un côté du séparateur. Le matériau du support est généralement un composé inorganique ou un polymère. Par exemple, le composé inorganique est une céramique. Des exemples de composés inorganiques utilisés comme support comprennent les céramiques, oxydes métalliques (Al₂O₃, ZrO₂, Cr₂O₃, TiO₂, CeO₂, Fe₂O₃) et non métalliques (ex. B₂O, SiO₂). Il est entendu que le composé n'est pas semi-conducteur ou conducteur électronique, et est électrochimiquement inerte dans les conditions prévues d'utilisation.

Dans cette alternative, la fonction agissant à titre de retardateur de flamme est greffée sur la surface du support. Cette fonction provient alors d'un groupement organophosphoré, ou d'une chaîne polymérique phosphorée. Un groupement organophosphoré ou une chaîne polymérique phosphorée peut comprendre un groupement ester phosphate ou phosphonate lié au support par un groupement de type ligand tel qu'un groupement alkylène, alcénylène, arylène, éther, ester, carbonate, carbamate, amine, amide, diazonium, triazène, silane, chacun pouvant être substitué ou une combinaison d'au moins deux de ceux-ci dans un même groupement (par exemple, une combinaison un groupement -OC(O)alkyl-O-alkyl-, -Si(OR)₂- OC(O)alkyl-C(O)O-alkyl-). Selon un exemple, le groupement arylène provient d'un groupement catéchol (*ortho* -O-phényle-O-).

Par exemple, le groupement organophosphoré ou la chaine polymérique phosphorée est de Formule I : 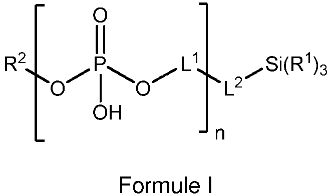 dans laquelle,
L¹ est, indépendamment à chaque occurrence, choisie parmi un alkylène, alkylèneoxycarbonylalkylène, et alkylènecarbonyloxyalkylène;
L² est choisi parmi un alkylène, alkylèneoxy (lié à l'atome de silicium par un atome d'oxygène), oxyalkylène (lié à l'atome de silicium par un atome de carbone), oxyalkylèneoxy, alkylèneoxycarbonylalkylène, alkylènecarbonyloxyalkylène, oxyalkylèneoxycarbonylalkylène, et oxyalkylènecarbonyloxyalkylène;
R¹ est, indépendamment à chaque occurrence, un groupement OH, Cl, C₁₋₆alkyle, OC₁₋₆alkyle, ou un lien covalent entre l'atome de silicium et l'atome d'oxygène du support, et où au moins un R¹ est un tel lien covalent;
R² est H, C₁₋₆alkyle, ou un groupement -L¹-L²-Si(R¹)₃; et
n est un nombre entier choisi parmi les nombres de 1 à 2000, par exemple, de 1 à 1000, ou de 1 à 500, ou de 1 à 100, ou de 1 à 50, ou de 1 à 10.

Par exemple, le groupement organophosphoré ou la chaine polymérique phosphorée est de Formule II : 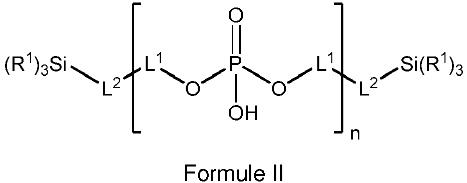 dans laquelle L¹, L², R¹ et n sont tels que définis à la Formule I.

Dans certains groupements ou chaines de Formule I ou II, l'alkylène compris dans les groupes L¹ alkylène, alkylèneoxycarbonylalkylène, ou alkylènecarbonyloxyalkylène comprend de 1 à 4 atomes de carbone, ou de 2 à 4 atomes de carbone, ou encore 2 ou 3 atomes de carbone. De façon similaire, l'alkylène compris dans les groupes L² alkylène, alkylèneoxy, oxyalkylène, oxyalkylèneoxy, alkylèneoxycarbonylalkylène, alkylènecarbonyloxyalkylène, oxyalkylèneoxycarbonylalkylène, ou oxyalkylènecarbonyloxyalkylène peut comprendre de 1 à 4 atomes de carbone, ou de 2 à 4 atomes de carbone, ou encore 2 ou 3 atomes de carbone.

Selon un autre exemple, le groupement organophosphoré ou la chaine polymérique phosphorée est de Formule III: 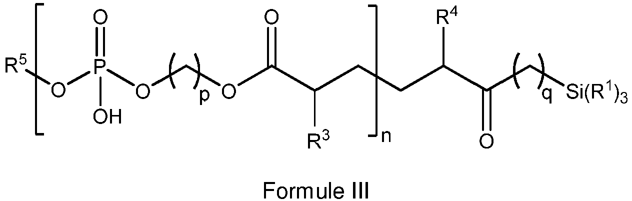 dans laquelle,
R¹ et n sont tels que définis aux Formules I et II;
R³ et R⁴ sont, indépendamment à chaque occurrence, un atome d'hydrogène ou un groupement C₁₋₃alkyle;
R⁵ est H, C₁₋₆alkyle, ou un groupement -(CH₂)ₚOC(O)CH(R³)CH₂CH₂CH(R⁴) (CH₂)_{q}-Si(R¹)₃;
p est un nombre entier indépendamment à chaque occurrence choisie parmi les nombres de 2 à 4; et
q est un nombre entier indépendamment à chaque occurrence choisie parmi les nombres de 1 à 4.

Une sous-classe de ce groupement organophosphoré ou chaine polymérique phosphorée peut être définie par la Formule IV : 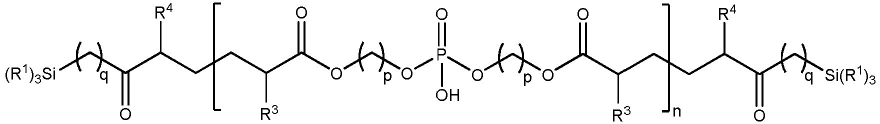 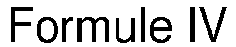 dans laquelle R¹, R³, R⁴, n, p et q sont tels que définis pour la Formule III.

Selon un exemple, p est 2 ou 3, de préférence 2, dans les Formules III et IV. Selon un autre exemple de ces deux formules, q est un nombre dans l'intervalle de 2 à 4, de préférence 2 ou3.

Selon une variante des Formules III et IV, R³ est un hydrogène ou un méthyle, de préférence un méthyle. Selon une autre variante des Formules III et IV, R⁴ est un hydrogène ou un méthyle, de préférence un méthyle. Par exemple, R³ et R⁴ peuvent être des groupements méthyles à chaque instance.

Par exemple, R¹ est un lien covalent entre l'atome de silicium et l'atome d'oxygène du support à au moins une occurrence pour le composé ou polymère des Formules I à IV. De préférence, R¹ est un lien covalent entre l'atome de silicium et l'atome d'oxygène du support à au moins trois occurrences pour le composé ou polymère des Formules I à IV. Par exemple, R¹ est un lien covalent avec le support à chaque instance.

Le présent document décrit aussi une composante séparateur-électrolyte comprenant le séparateur tel qu'ici décrit et un électrolyte. Par exemple, l'électrolyte comprend au moins l'un des éléments suivants : sel ionique, solvant polaire, aprotique et non-aqueux, polymère, ou liquide ionique. La composition de l'électrolyte peut être liquide ou gel et imprégner le séparateur. Dans l'alternative, l'électrolyte peut être sous forme solide et être incorporé à la porosité du séparateur.

Des exemples non-limitatifs de solvants d'électrolytes polaires, aprotiques et non-aqueux comprennent les carbonates cycliques (carbonate d'éthylène (EC), carbonate de propylène (PC), carbonate de butylène (BC), carbonate de vinylène (VC), et leurs dérivés); les carbonates acycliques (carbonate de diméthyle (DMC), carbonate de diéthyle (DEC), carbonate d'éthyle et méthyle (EMC), carbonate de dipropyle (DPC), et leurs dérivés); les lactones (γ-butyrolactone (γ-BL) et γ-valérolactone (γ-VL)); les éthers acycliques (1,2-diméthoxyéthane (DME), 1,2-diéthoxyéthane (DEE), éthoxyméthoxyéthane (EME), triméthoxyméthane, etc.); les éthers cycliques (tétrahydrofurane, 2-méthyltétrahydrofurane, 1,3-dioxolane, et leurs dérivés); les amides (formamide, acétamide, diméthylformamide), les nitriles (acétonitrile, propylnitrile), nitrométhane, triester d'acide phosphorique, diméthylsulfoxyde, sulfolane, méthylsulfolane, et leurs mélanges.

Par exemple, le sel ionique peut être un sel de métal alcalin ou alcalinoterreux, de préférence un sel de lithium. Des exemples non limitatifs de sels de lithium peuvent comprendre l'hexafluorophosphate de lithium (LiPF₆), le bis(trifluorométhanesulfonyl)imidure de lithium (LiTFSI), le bis(fluorosulfonyl)imidure de lithium (LiFSI), le 2-trifluorométhyl-4,5-dicyano-imidazolate de lithium (LiTDI), le 4,5-dicyano-1,2,3-triazolate de lithium (LiDCTA), le bis(pentafluoroéthylsulfonyl)imidure de lithium (LiBETI), le tétrafluoroborate de lithium (LiBF₄), le bis(oxalato)borate de lithium (LiBOB), le nitrate de lithium (LiNO₃), le chlorure de lithium (LiCl), le bromure de lithium (LiBr), le fluorure de lithium (LiF), le perchlorate de lithium (LiClO₄), l'hexafluoroarsénate de lithium (LiAsF₆), le trifluorométhanesulfonate de lithium (LiSO₃CF₃) (LiTf), le fluoroalkylphosphate de lithium Li[PF₃(CF₂CF₃)_{3]} (LiFAP), le tétrakis(trifluoroacétoxy)borate de lithium Li[B(OCOCF₃)₄] (LiTFAB), le bis(1,2-benzenediolato(2-)-O,O')borate de lithium Li[B(C₆O₂)₂] (LBBB), ou une combinaison de ceux-ci.

Des exemples de polymères d'électrolytes comprennent les polymères polyéthers linéaires, ramifiés et/ou réticulé (par exemple, des polymères basés sur le poly(oxyde d'éthylène) (PEO), ou le poly(oxyde de propylène) (PPO) ou d'un mélange des deux (ou un co-polymère EO/PO), et comprenant éventuellement des unités réticulables), les polyacrylonitriles, les polyméthacrylates de méthyle, et autres polymères compatibles.

Des exemples non limitatifs de liquides ioniques incluent le bis-(trifluorométhanesulfonyl)imidure de 1-éthyl-3-méthylimidazolium, le fluorosulfonylimidure de pyridinium, le bis(fluorosulfonyl)imidure de N-butyl-N-méthylpyrrolidinium, le bis(fluorosulfonyl)imidure de N-propyl-N-méthylpyrrolidinium, le bis(trifluorométhanesulfonyl)imidure de N-butyl-N-méthylpyrrolidinium, le bis(trifluorométhanesulfonyl)imidure de N-propyl-N-méthylpyrrolidinium, le bis(trifluorométhanesulfonyl)imidure de 1-octylpyridinium, le bis(trifluorométhanesulfonyl)imidure de 1-octyl-2-méthylpyridinium, et le bis(trifluorométhanesulfonyl)imidure de 1-octyl-4-méthylpyridinium.

Selon un exemple, l'électrolyte comprend au moins un sel ionique et au moins un solvant polaire, aprotique et non-aqueux. Selon un autre exemple, l'électrolyte comprend au moins un sel ionique et au moins un polymère d'électrolyte. Selon un autre exemple, l'électrolyte comprend au moins un sel ionique, au moins un solvant et au moins un polymère. Chacun de ces exemples peut aussi comprendre un liquide ionique.

Le présent document propose également une cellule électrochimique comprenant une électrode négative, une électrode positive, un électrolyte et le séparateur tel qu'ici défini. Dans le cadre du présent document, par électrode positive, on entend l'électrode qui fait office de cathode, quand la batterie débite du courant (c'est-à-dire lorsqu'elle est en processus de décharge) et joue le rôle d'anode lorsque la batterie est en processus de charge. À l'inverse, l'électrode négative fait office d'anode lorsque la batterie est en processus de décharge et de cathode alors que celle-ci est en processus de charge.

Selon un exemple, l'électrode positive comprend un matériau d'électrode positive, lequel comprend un matériau électrochimiquement actif, par exemple, sous forme de particule. Des exemples de matériaux électrochimiquement actifs d'électrode positive comprennent des phosphates de lithium et de métal, des oxydes et oxydes complexes, tels que LiM'PO₄ où M' est Fe, Ni, Mn, Co, ou une combinaison de ceux-ci, LiV₃O₈, LiMn₂O₄, LiM"O₂, où M" est Mn, Co, Ni, ou une combinaison de ceux-ci (tel que le NMC, LiMnₓCo_{y}Ni_{z}O₂ avec x+y+z = 1), Li(NiM‴)O₂, où M"' est Mn, Co, Al, Fe, Cr, Ti, et/ou Zr, et leurs combinaisons. Le matériau d'électrode positive peut aussi comprendre en outre un matériau conducteur et/ou un liant.

Des exemples de matériau conducteur électronique comprennent le noir de carbone (carbone Ketjen^{MC}, noir d'acétylène, etc.) le graphite, le graphène, les nanotubes de carbone, les fibres de carbone (telles les nanofibres de carbone (par exemple, VGCF formé en phase gazeuse)), du carbone non-poudreux obtenu par carbonisation d'un précurseur organique, ou une combinaison d'au moins deux de ceux-ci.

Des exemples non-limitatifs de liants comprennent les liants polymères polyéthers linéaires, ramifiés et/ou réticulé (par exemple, des polymères basés sur le poly(oxyde d'éthylène) (PEO), ou le poly(oxyde de propylène) (PPO) ou d'un mélange des deux (ou un co-polymère EO/PO), et comprenant éventuellement des unités réticulables), des liants solubles dans l'eau (tels que SBR (caoutchouc styrène-butadiène), NBR (caoutchouc acrylonitrile-butadiène), HNBR (NBR hydrogéné), CHR (caoutchouc d'épichlorohydrine), ACM (caoutchouc d'acrylate)), ou des liants de type polymères fluorés (tels que PVDF (fluorure de polyvinylidène), PTFE (polytétrafluoroéthylène), et leurs combinaisons). Certains liants, comme ceux solubles dans l'eau, peuvent aussi comprendre un additif comme le CMC (carboxyméthylcellulose).

D'autres additifs peuvent aussi être présents dans le matériau de l'électrode positive, comme des sels de lithium ou des particules inorganiques de type céramique ou verre, ou encore d'autres matériaux actifs compatibles (par exemple, du soufre).

Selon un exemple, le matériau d'électrode positive peut être appliqué à un collecteur de courant (par exemple, aluminium, cuivre) pour former l'électrode positive. Par exemple, le collecteur de courant est en aluminium recouvert de carbone. Selon une autre variante, l'électrode positive peut être autosupportée.

L'électrode négative comprend un matériau électrochimiquement actif d'électrode négative compatible avec le matériau d'électrode positive. Des exemples de matériaux électrochimiquement actifs d'électrodes négatives comprennent les métaux alcalins et alcalinoterreux et les alliages les comprenant (par exemple, lithium, sodium, potassium), le graphite et autres sources de carbone (carbone poreux, nanotubes de carbone, etc.), les oxydes de métaux et oxydes de métaux lithiés (tels que titanate de lithium, oxyde de vanadium, oxyde de vanadium lithié, etc.), et les matériaux organiques d'anode tels que le pérylène-3,4,9,10-tétracarboxylate de tetra-lithium (PTCLi4), dianhydride naphthalène-1,4,5,8-tétracarboxylique (NTCDA), dianhydride pérylène-3,4,9,10-tétracarboxylique (PTCDA), dicarboxylates π-conjugués, et anthraquinone. Comme pour l'électrode positive, des composantes additionnelles peuvent aussi faire partie de l'électrode négative, tels qu'un matériau conducteur électronique, un liant, etc.

Selon un autre aspect, une cellule électrochimique de la présente demande est comprise dans un accumulateur électrochimique. Par exemple, l'accumulateur électrochimique est choisi parmi une batterie au lithium, une batterie au sodium, une batterie au potassium et une batterie lithium-ion. Selon une variante d'intérêt, l'accumulateur électrochimique est une batterie lithium-ion.

Selon un autre aspect, les accumulateurs électrochimiques de la présente demande sont destinés à l'utilisation dans des appareils nomades, par exemple les téléphones portables, les appareils photo, les tablettes ou les ordinateurs portables, dans des véhicules électriques ou hybrides, ou dans le stockage d'énergie renouvelable.

### EXEMPLES

Les exemples qui suivent sont à titre d'illustration et ne doivent pas être interprétés comme limitant la portée de l'invention telle que décrite.

### Exemple 1 - Préparation d'une suspension de fibres de cellulose

Dans cet exemple, des fibres de cellulose millimétriques sous forme de pulpe industrielle (Södra black R^{MC}) sont utilisées afin de réduire le coût de fabrication. La pulpe ne reçoit pas de traitements supplémentaires avec des acides ou des enzymes, afin de réduire sa taille, ni d'ajout d'agents chimiques comme le sulfate d'aluminium hydraté pour changer son potentiel zêta (L. Jabbour, et al., Cellulose, 2013, 20, 1523-1545). Cette pulpe est composée de fibres dont la longueur est comprise entre 2,05 et 2,25 mm. Pour la préparation d'une suspension de fibres de cellulose, 400 mg de pulpe de cellulose sont dispersés dans 200 mL d'eau déionisée et mélangés vigoureusement à l'aide d'un mixeur de type ULTRA-TURRAX^{®}pendant au moins 15 minutes. Le mélange est refroidi jusqu'à température ambiante et une deuxième portion de 200 mL d'eau déionisée est ajoutée pour obtenir une suspension possédant une concentration d'environ 1 g de cellulose par litre. Ce mélange sera ensuite utilisé pour la fabrication des séparateurs en cellulose avec ou sans céramiques.

### Exemple 2 - Modification de surface de supports céramiques

Des groupements halogénés ou phosphatés sont greffés sur des céramiques (ici du Al₂O₃). De tels groupements sont reconnus comme possédant des propriétés de type retardateur de flamme (Kemmlein S., et al., J. Chromatogr. A, 2009, 1216, 320-333). Les molécules phosphatées sont notamment utilisées dans le secteur industriel (R. Sonnier, et al., Eur. Polym. J., 2015, 68, 313-325, et R. Hajj, et al., Polym. Deg. Stab., 2018, 147, 25-34).

### (a) Greffage de molécules halogénées (exemple de référence)

Le Schéma 1 illustre la procédure utilisée pour le greffage (A) de groupements 2,5-dichlorophényle sur Al₂O₃; et (B) de groupements 2,4,6-tribromophényle sur des particules d'Al₂O₃. Comme illustré, la chimie du diazonium a été utilisée pour le greffage de ces molécules halogénées à la surface de la céramique Al₂O₃. L'amine aromatique est transformée en son ion diazonium correspondant, qui est à son tour réduit ou décomposé pour former un radical qui vient se greffer à la surface des particules (D. Bélanger, J. Pinson, Chem. Soc. Rev., 2011, 40, 3995-4048).

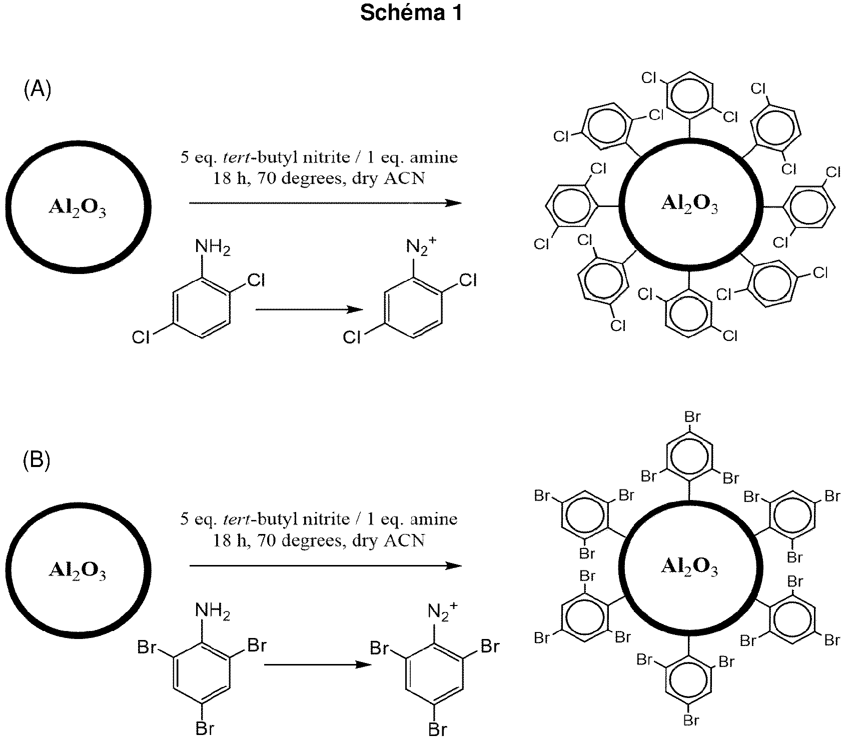

Pour une quantité donnée de céramique dispersée dans de l'acétonitrile anhydre, 1 équivalent de 2,5-dichloroaniline (A) ou de 2,4,6-tribromoaniline (B) est ajouté. Après dissolution de l'amine, 5 équivalents de *tert*-butyl nitrite sont ajoutés et la solution est chauffée doucement à 70 °C pendant 18 h. Le mélange réactionnel est ensuite filtré puis la poudre résultante est lavée successivement avec du DMF et de l'acétone avant d'être séchée dans une étuve à 80 °C.

### (b) Polymérisation d'une molécule phosphatée

Le Schéma 2 illustre de façon schématique les protocoles utilisés pour (A) le greffage de fonctions réactives méthacrylates à la surface de Al₂O₃ par réaction avec des silanes fonctionnalisés ; et (B) la polymérisation d'une molécule phosphatée.

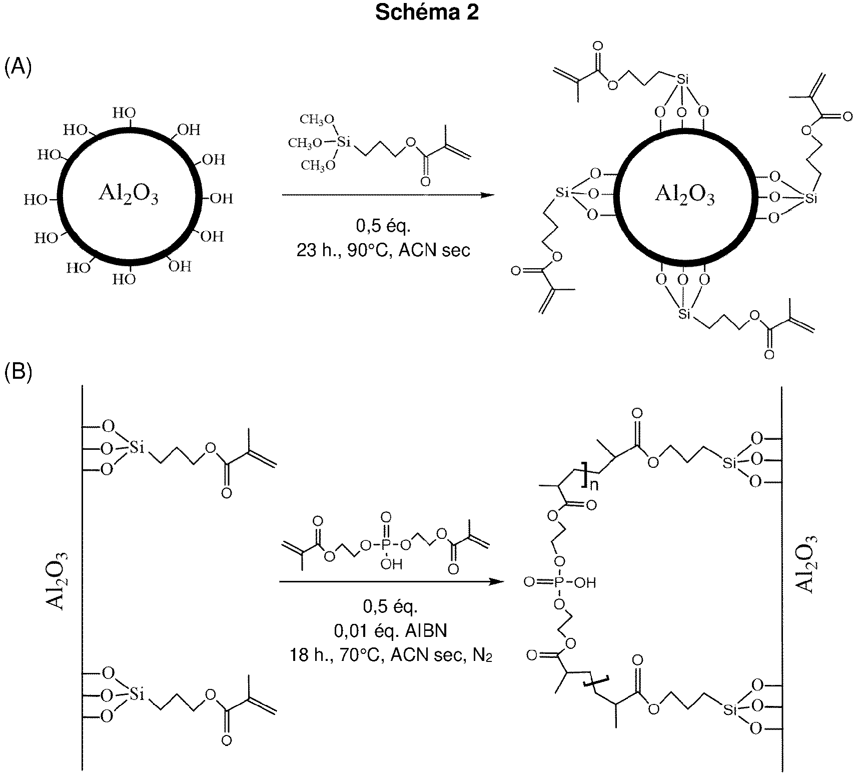

Dans un premier temps, les fonctions acrylates sont greffées à la surface de la céramique Al₂O₃. Pour une quantité donnée de céramique dispersée dans de l'acétonitrile anhydre, 0,5 équivalent de méthacrylate de 3-(triméthoxysilyl)propyle est ajouté et le mélange est chauffé à 90 °C durant 23 heures. Le mélange est ensuite refroidi à la température ambiante. La poudre est isolée par filtration et rincée une fois à l'acétone.

Dans un deuxième temps, la polymérisation d'une molécule phosphatée est initiée par un initiateur thermique. Pour une quantité donnée de céramique modifiée, 0,5 équivalent de bis[2-(méthacryloyloxy)éthyl] phosphate et 0,01 équivalent d'azobisisobutyronitrile (AIBN) sont ajoutés. Le mélange réactionnel est alors chauffé à 70 °C sous azote pendant 18 heures. Après réaction, la solution est filtrée puis la poudre résultante est lavée plusieurs fois avec de l'acétone avant d'être séchée dans une étuve à 80 °C. La poudre obtenue est nommée Al₂O₃-polyacrylatephosphate.

### Exemple 3 - Synthèse d'une céramique retardatrice de flamme (exemple de référence)

La céramique Mg₂B₂O₅, dont les propriétés de type retardateur de flammes ont été identifiées (O. Sheng, et al., Nano Lett., 2018, 18, 3104-3112). La procédure utilisée pour la préparation de filaments de la céramique est inspirée du travail de S. Li *et al.* (S. Li et al., Mater. Lett., 2010, 64, 151-153).

Dans un conteneur en téflon, 20,331 g de MgCl₂.6H₂O sont ajoutés à 7,567 g de NaBH₄. Des billes en oxyde de zirconium (environ 200 g) sont rajoutées puis le conteneur est fermé et placé dans un broyeur à billes planétaire de type Pulverisette 6^{MC}. Pour former la céramique, 120 h de mélange sont nécessaires à 300 RPM, en faisant successivement 120 cycles de 60 minutes de mélange et 30 minutes de pause pour éviter une surchauffe de l'appareil. L'intégralité de la poudre est récupérée et placée dans des creusets en céramique qui sont à leur tour insérés dans un four tubulaire. Le traitement thermique se fait sous air avec une rampe de 2°C/min de la température ambiante jusqu'à 800°C. La température est maintenue à 800°C pendant 2 h avant de laisser refroidir le four jusqu'à la température ambiante. La poudre est ensuite bien lavée à l'eau distillée pour éliminer le chlorure de sodium formé. La poudre est ensuite mise à sécher au four sous vide à 100°C.

### Exemple 4 - Préparation d'un séparateur

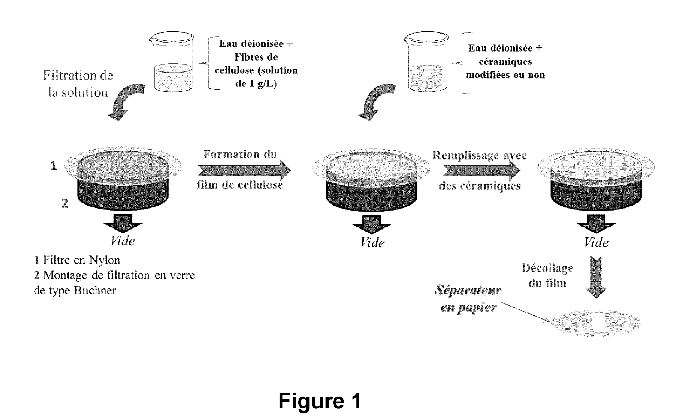

La Figure 1 présente une méthode de fabrication des séparateurs à base de cellulose. Les fibres de cellulose du séparateur en font un séparateur de type film de papier. La méthode utilisée est d'ailleurs similaire au procédé industriel de fabrication du papier.

Un volume précis de la solution diluée de cellulose (1 g/L) selon l'Exemple 1 correspondant à 50 mg de fibres de cellulose est rapidement filtré sur une membrane en Nylon (taille des pores : 0,22 µm, diamètre : 47 mm). L'aspiration est ensuite maintenue pendant au moins 15 minutes. Pendant ce temps, 5 ou 10 mg de céramique (Al₂O₃ modifié selon l'Exemple 2 ou non modifié, ou Mg₂B₂O₅ préparé à l'Exemple 3) sont dispersés dans une petite quantité d'eau distillée et mélangés avec une sonde à ultrasons jusqu'à obtenir une suspension homogène. La suspension est filtrée par-dessus le film de cellulose formé au préalable et l'aspiration est maintenue pendant 1 h pour sécher complètement le séparateur. Le film de cellulose est ensuite retiré du filtre en Nylon et est calandré à 80°C à l'aide de rouleaux chauffants. Il est découpé en cercle de 19 mm de diamètre pour être utilisé comme séparateur en piles de type bouton. Le séparateur papier est ensuite mis sous vide à 120 °C toute une nuit pour retirer les traces résiduelles d'eau avant d'être utilisé en batterie. Des films de papier sans céramiques sont aussi fabriqués pour comparaison. Les séparateurs obtenus ont environ 35-40 µm d'épaisseur et ne perdent pas de matière pendant la découpe et le calandrage.

### Exemple 5 - Caractérisation physico-chimique des céramiques et des séparateurs

### (a) Méthodes utilisées

### i. Thermogravimétrie

Les courbes d'analyse thermogravimétrique des poudres de céramique et des séparateurs ont été enregistrées en utilisant un appareil de modèle TGA 550 (instruments TA) avec une vitesse de chauffage de 10 °C/min de 30 à 700°C et un débit de gaz de 90 mL/min. Les mesures sont faites sous air et azote pour les céramiques et les séparateurs, respectivement.

### ii. Infrarouge

Les spectres infrarouges ont été enregistrés entre 400 et 4000 cm⁻¹ avec un spectromètre Bruker Vertex 70 équipé d'un accessoire smart ATR.

### iii. Microscopie

Les surfaces des poudres de céramique et des films en cellulose ont été analysées à l'aide d'un microscope électronique à balayage (MEB) de type Mira 3 de TESCAN. La micrographie et la carte des rayons X ont été acquises avec une tension d'accélération de 5 kV, un courant de sonde de 500 pA et une distance de travail de 10 mm.

Les photos optiques et images 3D ont été obtenues avec un microscope optique laser confocal VK-X200 de Keyence. Des optiques avec un grossissement de 20, 50, et 150 X ont été utilisées ainsi qu'un laser violet (408 nm).

### iv. Spectroscopie photoélectronique par rayons X

La composition chimique de surface (5 nm de profondeur) des poudres d'Al₂O₃ et Al₂O₃-phenyl-2,5-dichloro a été étudiée par spectroscopie photoélectronique à rayons X (XPS), à l'aide d'un spectromètre PHI 5600-ci (Physical Electronics, Eden Prairie, MN). La chambre principale de l'appareil a été maintenue à une pression < 8.10⁻⁹ Torr. Une source de rayons X en aluminium standard (Al kα = 1486,6 eV) a été utilisée pour enregistrer les spectres de survol (1400-0 eV, 10 min), tandis que le magnésium a été utilisé pour obtenir des spectres de haute résolution, les deux sans neutralisation de charge. L'angle de détection a été réglé à 45º par rapport à la surface de l'échantillon et la zone analysée était de 0,5 mm². Les spectres de haute résolution C 1s et O 1s ont été obtenus avec 30 et 20 balayages, respectivement.

### v. Diffraction des rayons X

Les diagrammes de diffraction ont été obtenus avec un diffractomètre de rayons X (DRX) SmartLab de Rigaku avec une source de Cobalt Kα avec un pas de 0,04º.

### vi. Stabilité thermique

Un test visuel de stabilité thermique des différents séparateurs en cellulose et d'un séparateur de type Celgard a été réalisé dans un four sous air. Les films sont placés dans une enceinte chauffante et la température est montée graduellement de 25 à 175 °C. La température est gardée constante à 25, 50, 75, 100, 125, 150 et 175 °C pendant 15 minutes et une photographie de tous les séparateurs est alors prise avant de passer à la température suivante.

### vii. Test de la flamme verticale

Les séparateurs sont suspendus dans une boite noire placée sous une hotte. Ils sont préalablement trempés pendant environ 10 secondes dans l'électrolyte standard utilisé dans la batterie, ici une solution 1 M de LiPF₆ dans un mélange de carbonate d'éthylène et de carbonate d'éthyle et de méthyle (EC:EMC) dans un ratio volumique de 3:7, puis rapidement égouttés pour éviter l'évaporation du solvant. Immédiatement après, une flamme est mise en contact avec le séparateur. L'expérience est arrêtée lorsqu'une carbonisation est obtenue ou, dans le cas du Celgard, lorsque la flamme s'éteint. Dans certains cas, plusieurs allumages peuvent être nécessaires.

### (b) Résultats

### i. Céramiques

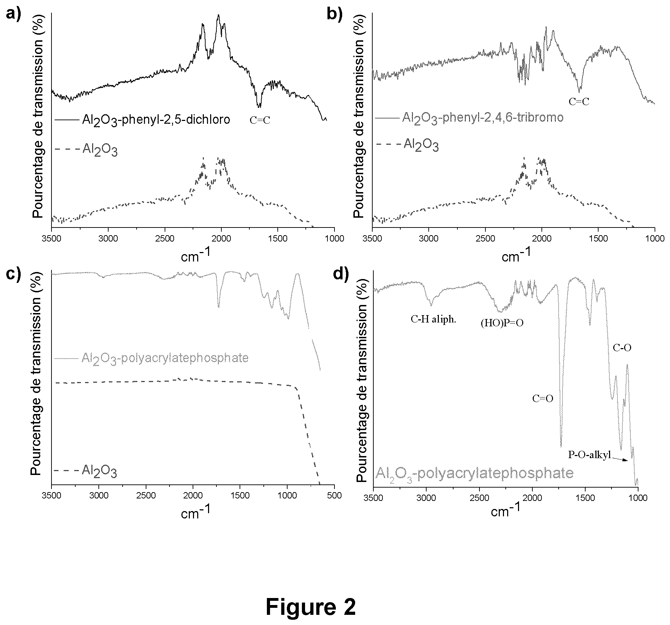

Les spectres infrarouges des différentes poudres d'Al₂O₃ sont présentés à la Figure 2. La faible présence de groupements aryles halogénés est confirmée par la une faible bande vers 1600 cm⁻¹ pour les poudres Al₂O₃-phenyl-2,5-dichloro (Figure 2(a)) et Al₂O₃-phenyl-2,4,6-tribromo (Figure 2(b)). Cette bande, absente pour la poudre non modifiée, est attribuée à la liaison C=C des cycles aromatiques. Ce faible signal indique un taux de greffage assez bas. Les bandes C-Br et C-Cl ne peuvent pas être visibles sur les spectres infrarouges, car attendues en dessous de 800 cm⁻¹ et donc cachées par la bande très intense d'Al₂O₃. Pour la poudre d'Al₂O₃-polyacrylatephosphate (Figure 2(c)), le spectre est bien différent de celui d'Al₂O₃ et confirme que les réactions de greffage et de modification de surface ont bien eu lieu. Un zoom à la Figure 2(d) montre les différentes bandes caractéristiques du polymère créé en surface de la céramique (voir Schéma 2(B) pour la structure). On y retrouve notamment les bandes associées aux C-H aliphatiques (~ 2900 cm⁻¹), aux liaisons C=O (~ 1700 cm⁻¹) et C-O (~ 1200 cm⁻¹), et à la fonction phosphate avec ses différentes contributions sur le spectre.

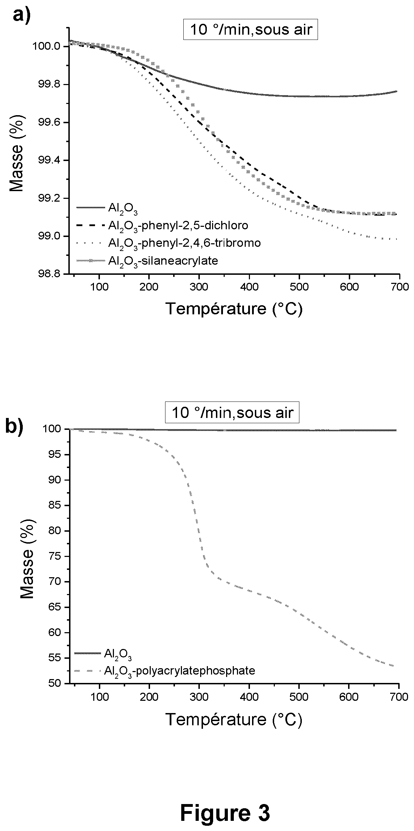

Les courbes thermogravimétriques des poudres d'Al₂O₃ modifiées, présentées à la Figure 3(a), sont en accord avec les résultats de l'analyse infrarouge puisqu'elles montrent une faible perte de masse pour les poudres modifiées par la chimie du diazonium. La poudre Al₂O₃-silaneacrylate, représentée au Schéma 2(A), présente aussi une faible perte de masse, mais confirme qu'une fine couche de fonctions acrylate est présente en surface des particules d'Al₂O₃. La polymérisation du monomère contenant la fonction phosphate avec les fonctions acrylates initialement présentes en surface d'Al₂O₃ est aussi confirmé par analyse thermogravimétrique (voir Figure 3(b)) avec une perte de masse de près de 30% vers 280 °C suivie par une perte progressive d'environ 15-20% jusqu'à 700 °C.

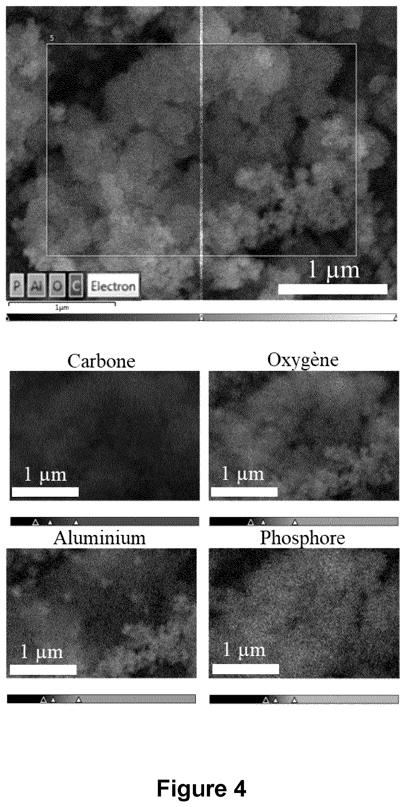

La poudre d'Al₂O₃-polyacrylatephosphate a été analysée par microscopie électronique à balayage (MEB) afin de mettre en évidence la présence du polymère phosphoré en surface de la céramique. La Figure 4 présente une image au MEB montrant des agglomérats de particules sphériques. La répartition chimique des éléments C, Al, O et P est également fournie. L'aluminium et l'oxygène venant des particules d'Al₂O₃ sont bien visibles puisque la cartographie chimique pour ces deux éléments fait bien ressortir les contours des agglomérats de céramique. Le phosphore (en bleu) et le carbone (en rouge) se retrouvent partout et recouvrent bien les particules d'Al₂O₃.

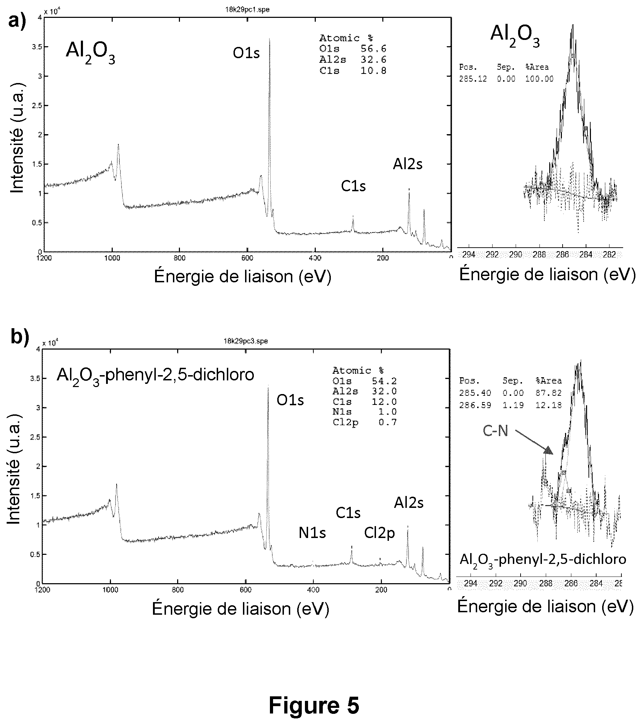

Les spectres XPS de survol (gauche) et de cœur (droite) des poudres d'Al₂O₃ et Al₂O₃-phenyl-2,5-dichloro sont présentés aux Figures 5(a) et 5(b). Cette analyse de surface permet de mettre en évidence la présence de chlore et d'azote en faible concentration après modification comme on peut le voir sur le spectre de survol de la céramique greffée. Les spectres de cœurs C 1s des deux poudres sont légèrement différents et une petite contribution à 287 eV, associée aux liaisons C-N de ponts azoïques pouvant exister, est observable.

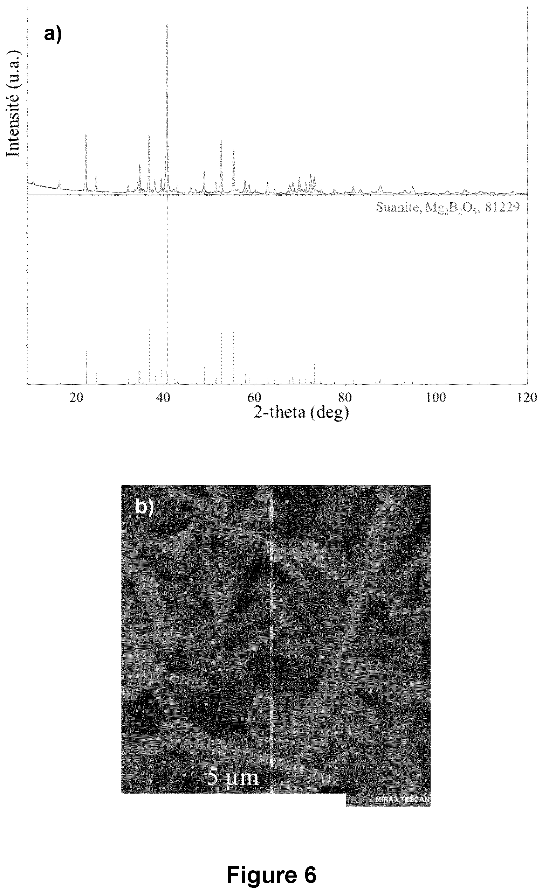

Le diffractogramme des rayons X et une image MEB de la poudre de Mg₂B₂O₅ synthétisée sont présentés aux Figures 6(a) et 6(b) respectivement. La poudre s'est révélée être très pure et la diffraction des rayons X n'a fait apparaître qu'une phase cristalline appartenant au Mg₂B₂O₅. Pour la morphologie, la poudre se constitue de bâtons de céramique pouvant aller de quelques centaines de nanomètres à quelques dizaines de micromètres.

### ii. Séparateurs

La résistance thermique des séparateurs a tout d'abord été évaluée en plaçant les séparateurs Celgard^{®}-3501 (comparatif), cellulose (comparatif) et cellulose + Mg₂B₂O₅ dans un four à différentes températures comprises entre 25 et 175 °C. Les photographies des films prises aux différentes températures sont présentées à la Figure 7. À 75 °C, le Celgard^{®}-3501 commence déjà à se plier sur lui-même sous l'effet de la chaleur et à 175 °C il est complètement dégradé. Au contraire les deux séparateurs à base de cellulose sont complètement stables jusqu'à cette température.

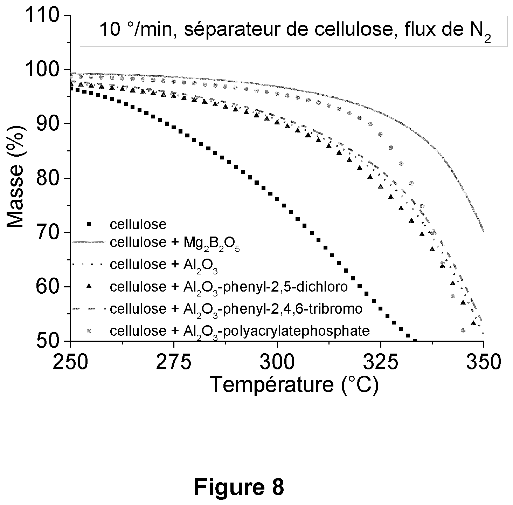

Les courbes thermogravimétriques sous azote des différents séparateurs de cellulose sont présentées à la Figure 8. À partir de 250 °C, une perte graduelle de masse est observée pour le séparateur fait entièrement de cellulose. L'ajout d'Al₂O₃ permet au séparateur de résister plus longtemps et est stable jusqu'environ 300 °C. Lorsque les céramiques modifiées Al₂O₃-phenyl-2,5-dichloro et Al₂O₃-phenyl-2,4,6-tribromo sont employées, l'effet sur la stabilité thermique est similaire à celui obtenu avec l'utilisation de la poudre d'Al₂O₃. Ceci peut être expliqué par les faibles taux de greffage sur ces poudres comme constaté avec les résultats présentés aux Figures 2, 3 et 5. Le séparateur fabriqué avec Al₂O₃-polyacrylatephosphate est quant à lui beaucoup plus stable et se dégrade vers 325 °C. Ce résultat était anticipé puisque la quantité de polymère greffé était plus importante dans ce cas-ci (voir Figure 3(b) et Figure 4). Finalement, le séparateur cellulose + Mg₂B₂O₅ est le plus stable et commence à se dégrader sévèrement vers 340 °C. Ainsi, celui-ci est plus stable d'environ 75 °C par rapport au séparateur fait entièrement de cellulose (courbe du bas).

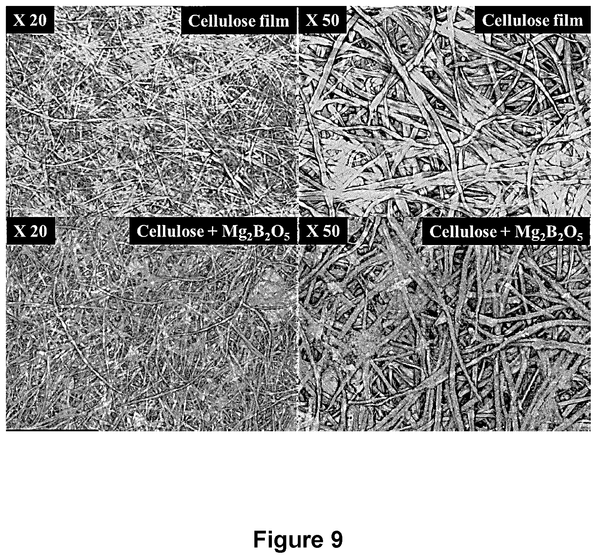

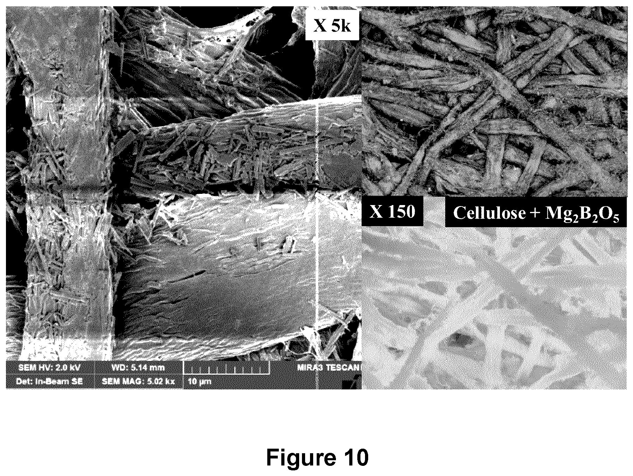

La Figure 9 montre les images MEB aux grossissements x20 (à gauche) et x50 (à droite) des séparateurs de cellulose (en haut) et cellulose + Mg₂B₂O₅ (en bas). L'entremêlement des fibres micrométriques de cellulose permet une tenue mécanique très forte. L'ajout de la céramique ne change pas la disposition des fibres et n'affecte pas la tenue mécanique du film. De plus forts grossissements, comme ceux présentés à la Figure 10, montrent que les bâtonnets de Mg₂B₂O₅ viennent se fixer un peu partout sur les fibres de cellulose, probablement grâce aux fonctions alcools qui viennent interagir avec les ions magnésium de la céramique. Cependant, il n'y a pas de gros agglomérats de Mg₂B₂O₅ qui sont formés et une grande partie de la porosité est conservée comme on peut le voir avec l'image en relief (Figure 10, image colorée). Le fait que les fibres de cellulose soient recouvertes de céramique permet une meilleure tenue thermique et est en parfait accord avec les résultats de l'analyse thermogravimétrique présentés à la Figure 8.

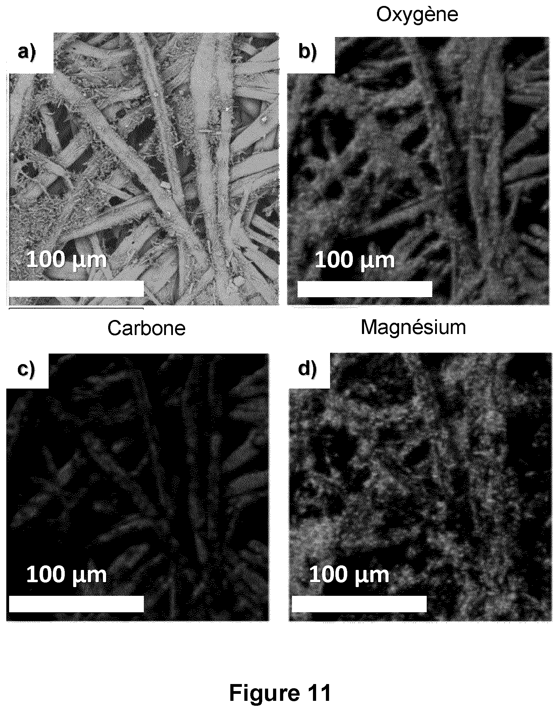

La Figure 11 montre une image MEB (a) du séparateur de cellulose + Mg₂B₂O₅ et avec sa cartographie chimique correspondante qui permet de mettre en évidence la présence de l'oxygène (b), du carbone (c), et du magnésium (d). L'image (d) met bien en évidence le recouvrement total des fibres de cellulose avec la céramique. Quelques zones plus riches en Mg₂B₂O₅ sont observées sans pour autant que celle-ci vienne boucher la porosité.

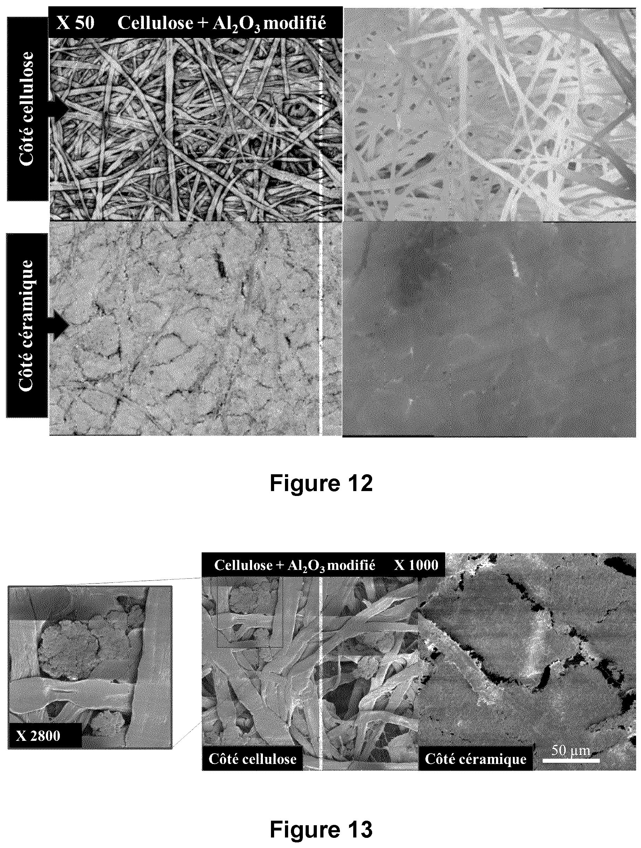

La Figure 12 présente les images MEB et en relief aux grossissements x50 des deux côtés (céramique et cellulose) du séparateur de cellulose + Al₂O₃-phenyl-2,5-dichloro. Le résultat est complètement différent de celui obtenu avec le séparateur cellulose + Mg₂B₂O₅ (voir Figure 10). On obtient après fabrication un côté riche en cellulose très poreuse et un autre côté très saturé en céramique avec une porosité extrêmement faible. De plus, on ne voit pas de céramique qui recouvre les fibres de cellulose comme on a pu le constater avec Mg₂B₂O₅, car les interactions chimiques sont différentes. En augmentant la concentration en céramique lors de la fabrication, toute la porosité pourrait être comblée. Il est aussi envisageable de faire un mélange de Mg₂B₂O₅ pour recouvrir les fibres de cellulose et d'Al₂O₃ pour combler la porosité.

La Figure 13 montre des images MEB du même film de cellulose + Al₂O₃-phenyl-2,5-dichloro sur les deux faces avec des grossissements plus élevés. La céramique a tendance à former de gros agglomérats de plusieurs dizaines de micromètres et qui sont piégés dans la porosité du film. Quelques-uns se retrouvent sur le côté riche en cellulose et restent bloqués entre des fibres de cellulose, mais la majorité s'accumule sur le côté riche en céramique du séparateur.

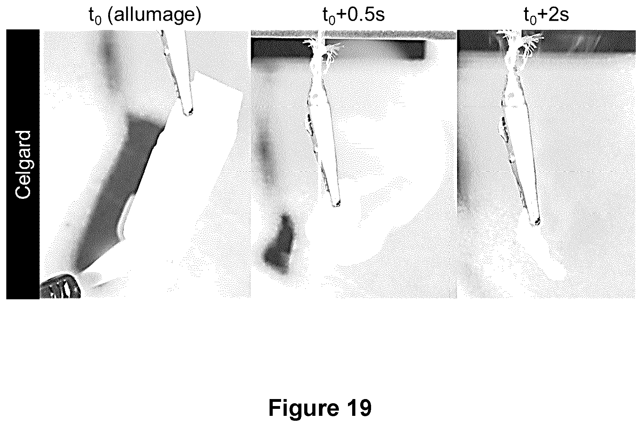

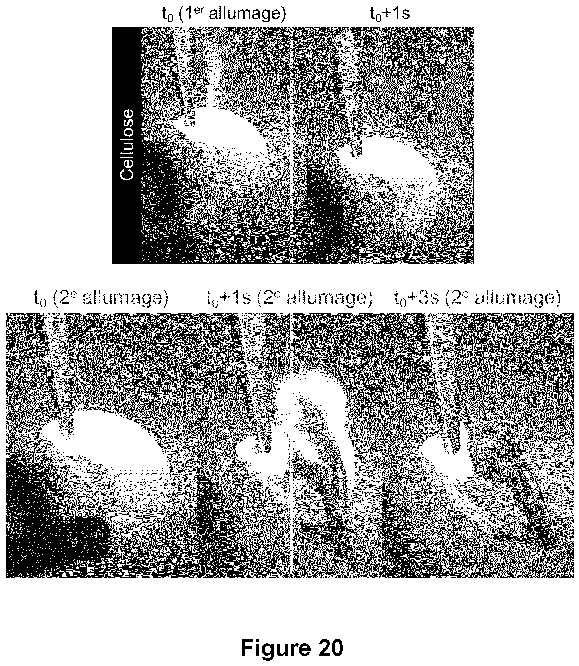

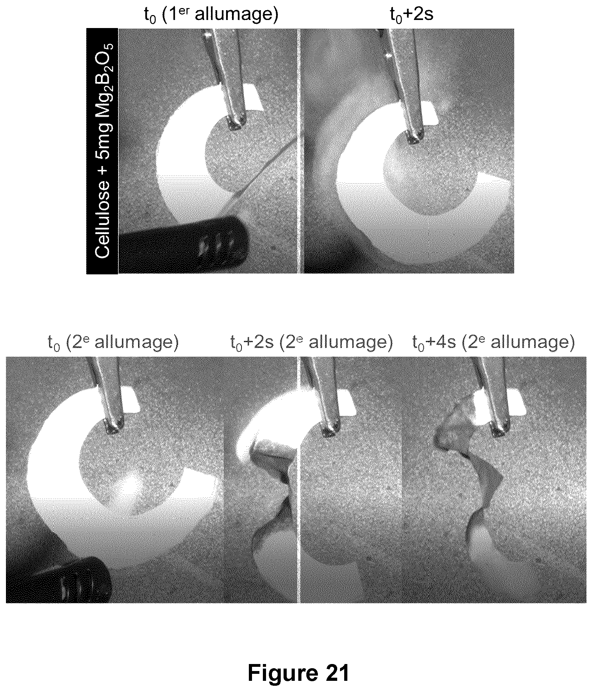

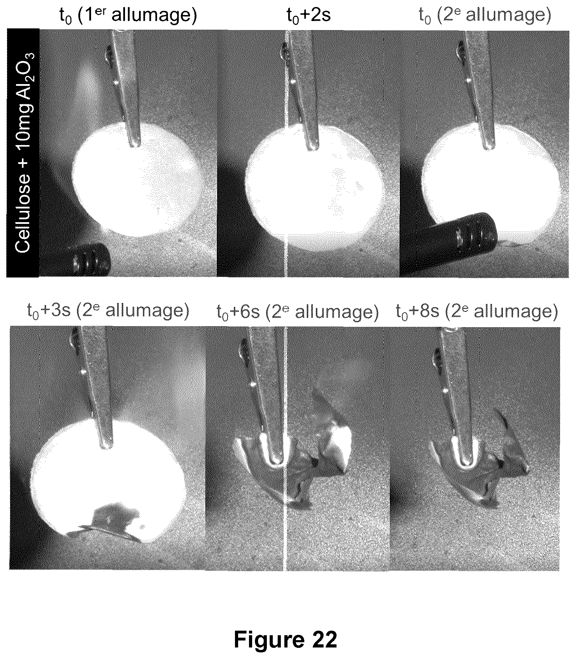

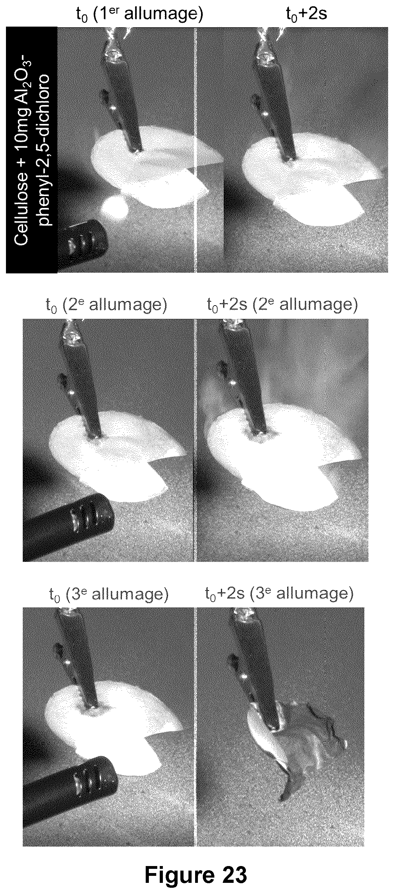

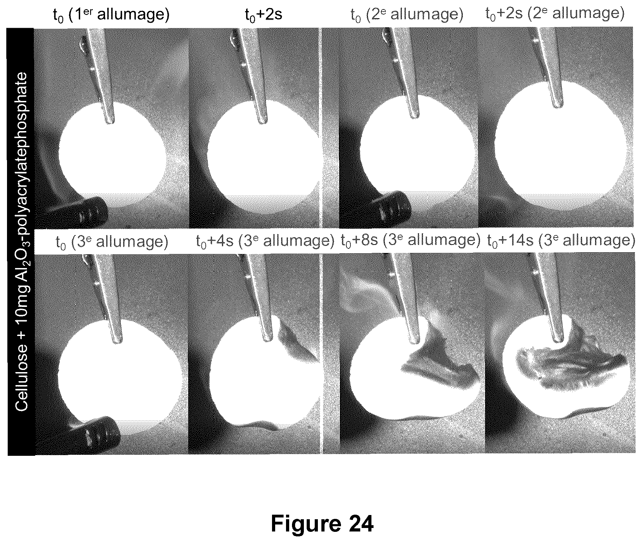

Les Figures 19 à 24 montrent des images des séparateurs Celgard^{®}-3501 (comparatif), cellulose (comparatif), cellulose avec Mg₂B₂O₅, cellulose avec Al₂O₃, cellulose avec Al₂O₃-phenyl-2,5-dichloro (Exemple 2(a)), et cellulose avec Al₂O₃- polyacrylatephosphate (Exemple 2(b)), respectivement, lorsque soumis au test de la flamme verticale selon l'Exemple 5(a)(vii). Les résultats de ce test sont résumés au Tableau 1 ci-dessous.

**Tableau 1. Nombre d'allumage et temps total requis pour brûler le séparateur**

| Séparateur | Nombre d'allumage(s) | Temps pour brûler (s) |
|---|---|---|
| Celgard^{™} | 1 | < 2 |
| Cellulose | 2 | 4 |
| Cellulose + Mg₂B₂O₅ | 2 | 8 |
| Cellulose + Al₂O₃ | 2 | 10 |
| Cellulose + Al₂O₃-phenyl-2,5-dichloro | 3 | 15 |
| Cellulose + Al₂O₃- polyacrylatephosphate | 3 | 24 |

Tandis que le séparateur Celgard^{™} a brûlé instantanément, le séparateur de cellulose sans retardateur de flamme a présenté une flamme s'éteignant rapidement et, après un deuxième allumage, le séparateur en cellulose a brûlé pour produire un charbon qui a arrêté avant la combustion complète du séparateur. Fait intéressant, avec l'ajout de Mg₂B₂O₅ la formation de charbon est moins importante et la combustion a été deux fois plus longue. La substitution du Mg₂B₂O₅ par du Al₂O₃, a démontré une efficacité encore plus grande puisque la combustion ne prend pas moins de 10 secondes. Cependant, la quantité de charbon formée semble plus importante dans ce cas-ci. Cette différence peut être due au fait que le Mg₂B₂O₅ couvre la surface des fibres de cellulose plutôt que de remplir la porosité comme il a pu être constaté pour Al₂O₃ selon les observations au MEB.

L'addition de groupes chloro-aryles sur Al₂O₃ a résulté en une plus grande quantité de fumée lors du premier allumage et 3 tentatives ont été nécessaires afin de brûler le séparateur après 15 secondes. Finalement, les meilleurs résultats ont été obtenus avec le séparateur contenant les particules d'Al₂O₃-polyacrylate phosphate. En effet, ce séparateur a à peine brûlé après 24 secondes et a demandé le maintien de la flamme durant plusieurs secondes pour démarrer l'allumage.

### Exemple 6 - Tests électrochimiques

### (a) Assemblage de piles

Les différents séparateurs ont été testés en piles boutons et combinés avec une cathode de NMC (composition : NCM523 (93%), Super C65 (3%), SFG6L (1%), PVdF (3%); masse active : 10,5 mg/cm²; densité : 3,2 g/cm³) et une anode de graphite (composition : graphite (97,5%), CMC (1,1%), SBR (1,4%); masse active : 5,5 mg/cm²; densité : 1,5 g/cm³). Une référence a été assemblée avec les mêmes électrodes et un séparateur industriel de type Celgard^{®}-3501. L'électrolyte utilisé est une solution 1 M de LiPF₆ dans le mélange EC:EMC (3:7). Les batteries ont été assemblées dans une boîte à gants sous argon avec une teneur en oxygène inférieure à 10 ppm.

### (b) Tests électrochimiques

Tous les tests électrochimiques sont réalisés avec un potentiostat VMP3. La stabilité électrochimique des films de cellulose dans l'électrolyte est évaluée par voltammétrie cyclique. Le film de cellulose est alors utilisé comme électrode de travail et séparé d'une contre-électrode de lithium par un séparateur Celgard^{®}-3501. La vitesse de balayage est de 0,5 mV/s et les scans sont enregistrés entre 2 et 5 V vs. Li/Li⁺.

Les batteries NMC/graphite sont cyclées entre 3 et 4,4 V pour deux cycles de formation en C/24 et 100 cycles en C/10. Une mesure d'impédance électrochimique est prise de façon régulière à 3 V en fin de décharge.

### i. Stabilité électrochimique des fibres de cellulose

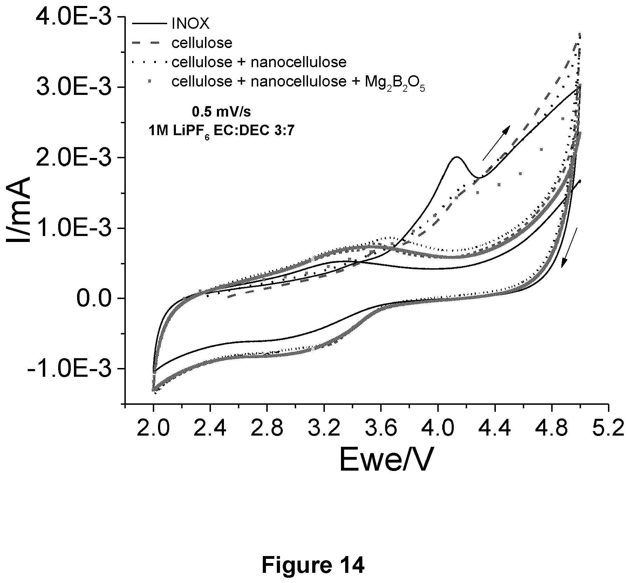

La stabilité électrochimique des fibres de cellulose a été évaluée par voltammétrie cyclique dans l'électrolyte utilisé en batterie. La Figure 14 montre les voltammogrammes cycliques entre 2 et 5 V vs. Li/Li⁺ des films de cellulose, cellulose + nanocellulose et cellulose + nanocellulose + Mg₂B₂O₅. Une référence consistant à utiliser simplement une cale en inox comme électrode de travail a aussi été ajoutée pour comparaison. Durant le premier cycle, un pic anodique est observé entre 3,8 et 5 V vs. Li/Li⁺ et attribué à l'oxydation irréversible de l'électrolyte. Ce phénomène bien connu est toujours présent dans les cycles suivants, mais de façon moins prononcée. Les voltammogrammes pour les séparateurs de cellulose avec et sans Mg₂B₂O₅ sont identiques à la référence. Ces résultats démontrent que les fibres de cellulose ne sont pas électroactives et donc qu'elles peuvent être utilisées en batterie Li-ion et plus spécifiquement pour des batteries à haut voltage comme NMC/graphite.

### ii. Performances électrochimiques des batteries NMC/graphite

Des piles NMC/graphite ont été assemblées comme en (a) avec les différents séparateurs de cellulose et avec le Celgard^{®}-3501 comme comparatif. L'oxyde de nickel manganèse cobalt (NMC) est connu pour être un matériau pouvant provoquer l'emballement thermique des batteries Li-ion lors de surcharge (D. Ouyang, et al., Appl. Sci., 2017, 7, 1314). Il est donc un parfait candidat pour être combiné avec les séparateurs en cellulose contenant les céramiques et les retardateurs de flamme.

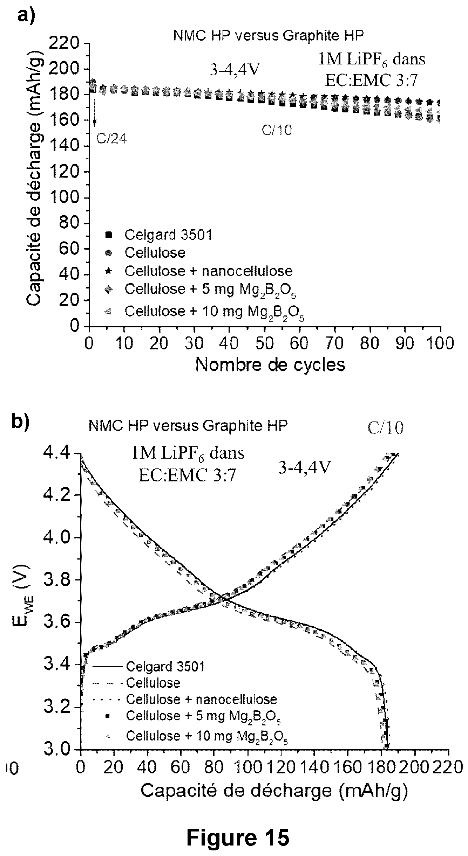

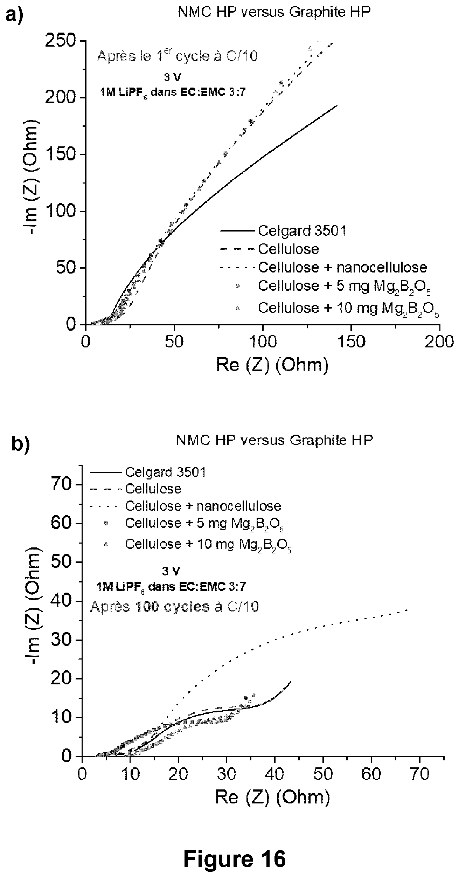

La Figure 15 montre (a) le cyclage en C/10 pour 100 cycles et (b) la première charge et décharge en C/10, des batteries NMC/graphite assemblées avec les séparateurs faits de cellulose, d'un mélange de cellulose + Mg₂B₂O₅ et du Celgard^{®}-3501. Les courbes de charge/décharge de la Figure 15(b) ont le même profil et délivrent une capacité spécifique d'environ 180 mAh/g dépendante de la plage de potentiel. La stabilité en cyclage est relativement similaire pour toutes les batteries montrant une perte graduelle de capacité pouvant être due à la dégradation de l'électrolyte ou à la dissolution de la matière active. D'après les diagrammes de Nyquist de la Figure 16, il semblerait que cette perte de capacité soit davantage due à la dissolution progressive des électrodes plutôt qu'à l'augmentation de la résistance causée par l'oxydation de l'électrolyte. En effet, les impédances enregistrées à 3 V diminuent au fur et à mesure du cyclage et la différence est frappante entre le 1^{er} (voir Figure 16(a)) et le 100^{e} cycle (voir Figure 16(b)) de charge/décharge en C/10.

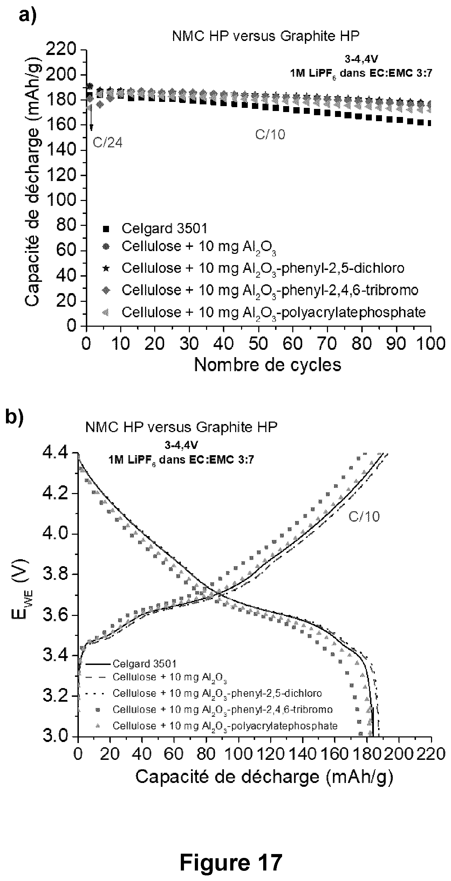

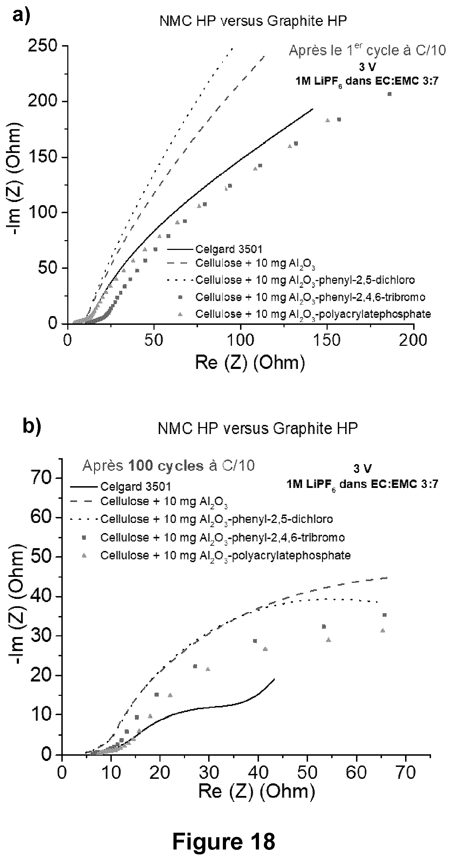

Des piles NMC/graphite ont aussi été assemblées avec les séparateurs en cellulose contenant la céramique Al₂O₃ modifiée et non modifiée. Les longs cyclages et les courbes de charge/décharge sont montrés à la Figure 17. En utilisant les séparateurs avec Al₂O₃, on remarque que la capacité spécifique est plus stable au cours du cyclage par rapport à la batterie assemblée avec le séparateur commercial Celgard^{®}-3501. En second lieu, par rapport à ce qui a été observé pour les cyclages de la Figure 15, on remarque que la capacité spécifique augmente légèrement sur les dix premiers cycles avant de se stabiliser. Ce phénomène peut très bien être observé à la Figure 17(b) avec la courbe de charge/décharge pour le 1^{er} cycle en C/10 pour la batterie avec le séparateur Al₂O₃-phenyl-2,4,6-tribromo. Ces deux observations semblent confirmer que la perte de capacité sur les 100 cycles est directement reliée à la porosité du séparateur. En effet, les images MEB du séparateur en cellulose avec la céramique modifiée, présentées aux Figures 12 et 13, montraient que les agglomérats bouchaient complètement la porosité, ce qui limite l'accès à l'électrolyte pendant les premiers cycles (activation et gain de capacité progressif) et prévient la dissolution de la matière active durant le cyclage (meilleure tenue en cyclage). Finalement, les impédances des batteries assemblées avec la céramique Al₂O₃ modifiée et non modifiée (Figure 18) montrent le même comportement sur 100 cycles en C/10 que celui observé pour les batteries de la Figure 16.

## Revendications

1. Séparateur pour cellule électrochimique comprenant des fibres de cellulose et un retardateur de flamme, dans lequel le retardateur de flamme comprend un groupement organophosphoré, une chaîne polymérique phosphorée, ou une de leurs combinaisons, le retardateur de flamme étant fixé sur un support par une ou des liaison(s) covalente(s), le support étant intégré à la porosité des fibres de cellulose et/ou fixé sur les fibres de cellulose par des interactions intermoléculaires électrostatiques et/ou par des liaisons hydrogènes, dans lequel le support est sous forme de particules formées d'un matériau électrochimiquement inerte et non conducteur électronique.

2. Séparateur de la revendication 1, dans lequel la cellulose est naturelle.

3. Séparateur de la revendication 1, dans lequel la cellulose est une cellulose modifiée, laquelle comprend de préférence des groupements hydrophiles ou des groupements hydrophobes.

4. Séparateur de l'une quelconque des revendications 1 à 3, dans lequel la taille moyenne des fibres de cellulose se situe :
- entre 5 nm et 5 mm, ou entre 500 nm et 3 mm, ou entre 1 µm et 3 mm, entre 100 µm et 3 mm, ou entre 250 µm et 3 mm;
- entre 750 µm et 2,5 mm, ou entre 1 mm et 2,5 mm, ou entre 0,5 mm et 3 mm, ou encore entre 1 mm et 3 mm; ou
- entre 5 nm et 500 µm, ou entre 50 nm et 100 µm, ou entre 250 nm et 50 µm, ou entre 250 nm et 10 µm.

5. Séparateur de l'une quelconque des revendications 1 à 4, dans lequel le matériau électrochimiquement inerte est conducteur ionique.

6. Séparateur de la revendication 5, dans lequel le matériau électrochimiquement inerte est choisi parmi un composé inorganique et un polymère.

7. Séparateur de la revendication 6, dans lequel le composé inorganique est un oxyde métallique ou non métallique ou une céramique.

8. Séparateur de la revendication 6, dans lequel le composé inorganique est choisi parmi Al₂O₃, ZrO₂, Cr₂O₃, TiO₂, CeO₂, Fe₂O₃, B₂O, et SiO₂.

9. Séparateur de l'une quelconque des revendications 1 à 8, dans lequel le retardateur de flamme est choisi parmi :
un groupement organophosphoré ou chaîne polymérique phosphorée comprenant un groupement ester phosphate ou phosphonate lié au support par au moins un groupement choisi parmi un groupement alkylène, alcénylène, arylène, éther, ester, carbonate, carbamate, amine, amide, diazonium, triazène, silane, et une combinaison d'au moins deux de ceux-ci.

10. Séparateur de la revendication 9, dans lequel le groupement organophosphoré ou chaîne polymérique phosphorée est de Formule I, II, III ou IV : 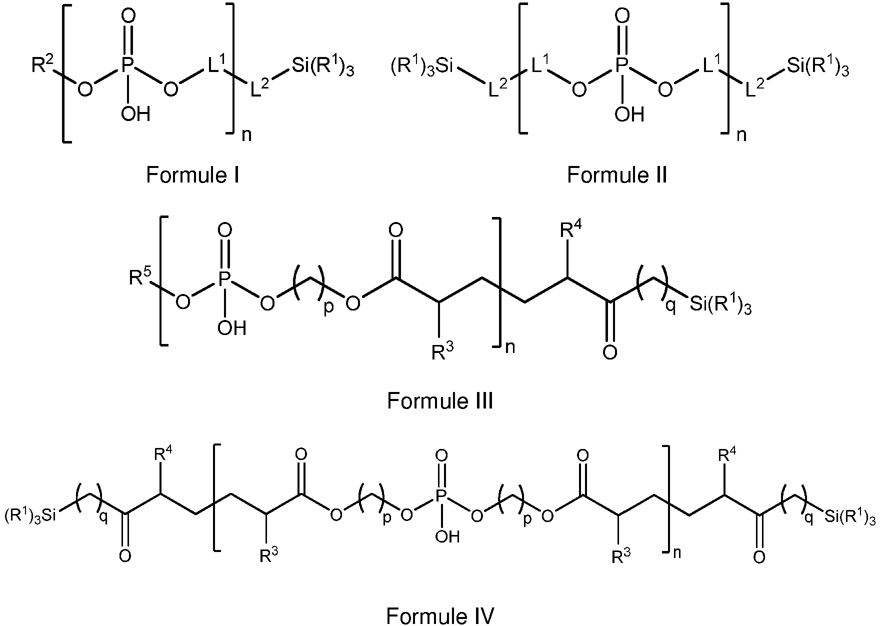 dans lesquelles,
L¹ est, indépendamment à chaque occurrence, choisi parmi alkylène, alkylèneoxycarbonylalkylène, et alkylènecarbonyloxyalkylène;
L² est choisi parmi un alkylène, alkylèneoxy (lié à l'atome de silicium par un atome d'oxygène), oxyalkylène (lié à l'atome de silicium par un atome de carbone), oxyalkylèneoxy, alkylèneoxycarbonylalkylène, alkylènecarbonyloxyalkylène, oxyalkylèneoxycarbonylalkylène, et oxyalkylènecarbonyloxyalkylène;
R¹ est, indépendamment à chaque occurrence, un groupement OH, Cl, C₁₋₆alkyle, OC₁₋₆alkyle, ou un lien covalent entre l'atome de silicium et l'atome d'oxygène du support, et où au moins un R¹ est un tel lien covalent;
R² est H, C₁₋₆alkyle, ou un groupement -L¹-L²-Si(R¹)₃;
R³ et R⁴ sont, indépendamment à chaque occurrence un atome d'hydrogène ou un groupement C₁₋₃alkyle;
R⁵ est H, C₁₋₆alkyle, ou un groupement -(CH₂)ₚOC(O)CH(R³)CH₂CH₂CH(R⁴)(CH₂)_{q}-Si(R¹)₃;
n est un nombre entier choisi parmi les nombres de 1 à 2000, par exemple, de 1 à 1000, ou de 1 à 500, ou de 1 à 100, ou de 1 à 50, ou de 1 à 10;
p est un nombre entier indépendamment à chaque occurrence choisi parmi les nombres de 2 à 4, ou les nombres 2 et 3, de préférence 2; et
q est un nombre entier indépendamment à chaque occurrence choisi parmi les nombres de 1 à 4, ou les nombres de 2 à 4, de préférence 2 ou 3.

11. Séparateur de la revendication 10, dans lequel l'alkylène compris dans les groupes L¹ alkylène, alkylèneoxycarbonylalkylène, ou alkylènecarbonyloxyalkylène comprend de 1 à 4 atomes de carbone, ou de 2 à 4 atomes de carbone, ou encore 2 ou 3 atomes de carbone; et/ou l'alkylène compris dans les groupes L² alkylène, alkylèneoxy, oxyalkylène, oxyalkylèneoxy, alkylèneoxycarbonylalkylène, alkylènecarbonyloxyalkylène, oxyalkylèneoxycarbonylalkylène, ou oxyalkylènecarbonyloxyalkylène comprend de 1 à 4 atomes de carbone, ou de 2 à 4 atomes de carbone, ou encore 2 ou 3 atomes de carbone.

12. Séparateur de la revendication 10, dans lequel R³ est un hydrogène ou un méthyle, de préférence un méthyle.

13. Séparateur de la revendication 10 ou 12, dans lequel R⁴ est un hydrogène ou un méthyle, de préférence un méthyle.

14. Séparateur de l'une quelconque des revendications 10 à 13, dans lequel R¹ est un lien covalent entre l'atome de silicium et l'atome d'oxygène du support à au moins une occurrence, ou R¹ est un lien covalent avec le support à au moins trois occurrences, de préférence à chaque occurrence.

15. Composante séparateur-électrolyte comprenant un séparateur tel que défini à l'une quelconque des revendications 1 à 14 et un électrolyte comprenant au moins un élément choisi parmi un sel, un solvant polaire, aprotique et non-aqueux, un liquide ionique, et un polymère.

16. Composante séparateur-électrolyte de la revendication 15, laquelle comprend un solvant polaire, aprotique et non-aqueux, de préférence choisi parmi les carbonates cycliques (carbonate d'éthylène (EC), carbonate de propylène (PC), carbonate de butylène (BC), carbonate de vinylène (VC), et leurs dérivés); les carbonates acycliques (carbonate de diméthyle (DMC), carbonate de diéthyle (DEC), carbonate d'éthyle et méthyle (EMC), carbonate de dipropyle (DPC), et leurs dérivés); les lactones (γ-butyrolactone (γ-BL) et γ-valérolactone (γ-VL)); les éthers acycliques (1,2-diméthoxyéthane (DME), 1,2-diéthoxyéthane (DEE), éthoxyméthoxyéthane (EME), triméthoxyméthane, etc.); les éthers cycliques (tétrahydrofurane, 2-méthyltétrahydrofurane, 1,3-dioxolane, et leurs dérivés); les amides (formamide, acétamide, diméthylformamide), les nitriles (acétonitrile, propylnitrile), nitrométhane, triester d'acide phosphorique, diméthylsulfoxyde, sulfolane, méthylsulfolane, et leurs mélanges.

17. Composante séparateur-électrolyte de la revendication 15 ou 16, laquelle comprend un sel d'un métal alcalin ou alcalinoterreux, de préférence un sel de lithium, de préférence choisi parmi l'hexafluorophosphate de lithium (LiPF₆), le bis(trifluorométhanesulfonyl)imidure de lithium (LiTFSI), le bis(fluorosulfonyl)imidure de lithium (LiFSI), le 2-trifluorométhyl-4,5-dicyano-imidazolate de lithium (LiTDI), le 4,5-dicyano-1,2,3-triazolate de lithium (LiDCTA), le bis(pentafluoroéthylsulfonyl)imidure de lithium (LiBETI), le tétrafluoroborate de lithium (LiBF₄), le bis(oxalato)borate de lithium (LiBOB), le nitrate de lithium (LiNO₃), le chlorure de lithium (LiCl), le bromure de lithium (LiBr), le fluorure de lithium (LiF), le perchlorate de lithium (LiClO₄), l'hexafluoroarsénate de lithium (LiAsF₆), le trifluorométhanesulfonate de lithium (LiSO₃CF₃) (LiTf), le fluoroalkylphosphate de lithium Li[PF₃(CF₂CF₃)₃] (LiFAP), le tétrakis(trifluoroacétoxy)borate de lithium Li[B(OCOCF₃)₄] (LiTFAB), le bis(1,2-benzenediolato(2-)-O,O')borate de lithium Li[B(C₆O₂)₂] (LBBB), ou une combinaison de ceux-ci.

18. Composante séparateur-électrolyte de l'une quelconque des revendications 15 à 17, laquelle comprend un polymère.

19. Composante séparateur-électrolyte de l'une quelconque des revendications 15 à 18, laquelle comprend un liquide ionique.

20. Cellule électrochimique comprenant :
- une électrode négative, une électrode positive, un électrolyte et un séparateur tel que défini à l'une quelconque des revendications 1 à 14; ou
- une électrode négative, une électrode positive et une composante séparateur-électrolyte telle que définie à l'une quelconque des revendications 15 à 19.

21. Cellule électrochimique selon la revendication 20, dans laquelle l'électrode positive comprend un matériau électrochimiquement actif d'électrode positive, éventuellement un liant, et éventuellement un matériau conducteur électronique, le matériau électrochimiquement actif d'électrode positive étant de préférence choisi parmi les phosphates de métaux, les phosphates de métaux lithiés, les oxydes de métaux, et les oxydes de métaux lithiés.

22. Cellule électrochimique de la revendication 20 ou 21, dans lequel l'électrode négative comprend un matériau électrochimiquement actif d'électrode négative, le matériau électrochimiquement actif d'électrode négative étant de préférence choisi parmi les métaux alcalins et alcalinoterreux et les alliages les comprenant (par exemple, lithium, sodium, potassium), le graphite et autres sources de carbone (carbone poreux, nanotubes de carbone, etc.), les oxydes de métaux et oxydes de métaux lithiés (tels que titanate de lithium, oxyde de vanadium, oxyde de vanadium lithié, etc.), et les matériaux organiques d'anode (tels que le pérylène-3,4,9,10-tétracarboxylate de tetra-lithium (PTCLi4), dianhydride naphthalène-1,4,5,8-tétracarboxylique (NTCDA), dianhydride pérylène-3,4,9,10-tétracarboxylique (PTCDA), dicarboxylates π-conjugués, et anthraquinone).

23. Accumulateur électrochimique comprenant au moins une cellule électrochimique telle que définie à l'une quelconque des revendications 20 à 22, ledit accumulateur électrochimique étant de préférence choisi parmi une batterie au lithium, une batterie au sodium, une batterie au potassium et une batterie lithium-ion.

## Patentansprüche

1. Separator für elektrochemische Zelle, umfassend Cellulosefasern und ein Flammschutzmittel, wobei das Flammschutzmittel eine phosphororganische Gruppierung, eine phosphorhaltige Polymerkette oder eine Kombination davon umfasst, wobei das Flammschutzmittel durch eine oder mehrere kovalente Bindungen an einem Träger befestigt ist, wobei der Träger in die Porosität der Cellulosefasern integriert ist und/oder durch intermolekulare elektrostatische Wechselwirkungen und/oder durch Wasserstoffbrückenbindungen an den Cellulosefasern befestigt ist, wobei der Träger in Form von Partikeln ist, die aus einem elektrochemisch inerten und elektronisch nicht leitenden Material gebildet sind.

2. Separator nach Anspruch 1, wobei die Cellulose natürlich ist.

3. Separator nach Anspruch 1, wobei die Cellulose modifiziert ist, die vorzugsweise hydrophile Gruppierungen oder hydrophobe Gruppierungen umfasst.

4. Separator nach einem der Ansprüche 1 bis 3, wobei die durchschnittliche Größe der Cellulosefasern wie folgt ist:
- zwischen 5 nm und 5 mm, oder zwischen 500 nm und 3 mm, oder zwischen 1 µm und 3 mm, zwischen 100 µm und 3 mm, oder zwischen 250 µm und 3 mm;
- zwischen 750 µm und 2,5 mm oder zwischen 1 mm und 2,5 mm oder zwischen 0,5 mm und 3 mm oder zwischen 1 mm und 3 mm; oder
- zwischen 5 nm und 500 µm oder zwischen 50 nm und 100 µm oder zwischen 250 nm und 50 µm oder zwischen 250 nm und 10 µm.

5. Separator nach einem der Ansprüche 1 bis 4, wobei das elektrochemisch inerte Material ionenleitend ist.

6. Separator nach Anspruch 5, wobei das elektrochemisch inerte Material ausgewählt ist aus einer anorganischen Verbindung oder einem Polymer.

7. Separator nach Anspruch 6, wobei die anorganische Verbindung ein Metall- oder Nichtmetalloxid oder eine Keramik ist.

8. Separator nach Anspruch 6, wobei die anorganische Verbindung ausgewählt ist aus Al₂O₃, ZrO₂, Cr₂O₃, TiO₂, CeO₂, Fe₂O₂, B₂O und SiO₂.

9. Separator nach einem der Ansprüche 1 bis 8, wobei das Flammschutzmittel ausgewählt ist aus:
einer phosphorhaltigen organischen Gruppe oder einer phosphorhaltigen Polymerkette, umfassend eine Phosphat- oder Phosphonatestergruppierung, die mittels mindestens einer Gruppierung an den Träger gebunden ist, die ausgewählt ist aus einer Alkylen-, Alkenylen-, Arylen-, Ether-, Ester-, Carbonat-, Carbamat-, Amin-, Amid-, Diazonium-, Triazen-, Silan-Gruppierung oder einer Kombination von mindestens zwei dieser Gruppierungen.

10. Separator nach Anspruch 9, wobei die organophosphorhaltige Gruppierung oder die phosphorierte Polymerkette gemäß Formel I bis IV ist: 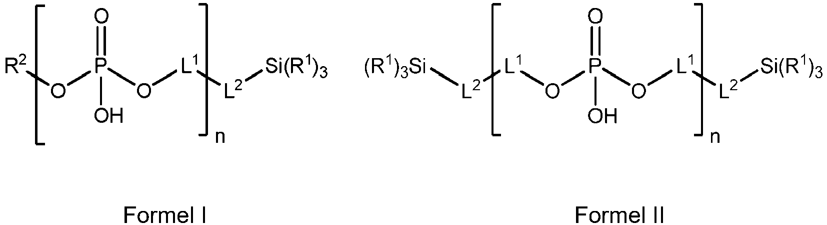 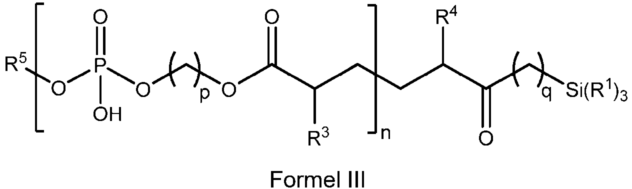 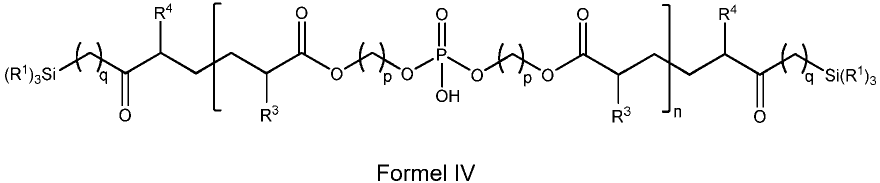 wobei
L¹ unabhängig von jedem Vorkommen, ausgewählt ist aus Alkylen, Alkylenoxycarbonylalkylen und Alkylencarbonyloxyalkylen;
L² ausgewählt ist aus Alkylen, Alkylenoxy (über ein Sauerstoffatom gebunden an das Siliziumatom), Oxyalkylen (über ein Kohlenstoffatom gebunden an das Siliziumatom), Oxyalkylenoxy, Alkylenoxycarbonylalkylen, Alkylencarbonyloxyalkylen, Oxyalkylenoxycarbonylalkylen und Oxyalkylencarbonyloxyalkylen;
R¹ unabhängig von jedem Vorkommen eine OH, Cl-, C₁-₆-Alkyl-, OC₁₋₆-Alkylgruppierung oder eine kovalente Bindung zwischen dem Siliciumatom und dem Sauerstoffatom des Trägers ist, und wobei mindestens ein R¹ eine solche kovalente Bindung ist;
R² H, C₁₋₆-Alkyl oder eine -L¹-L²-Si(R¹)₃-Gruppierung ist;
R³ und R⁴ unabhängig bei jedem Vorkommen ein Wasserstoffatom oder eine C₁-Alkylgruppierung sind;
R⁵ H, C₁-₆-Alkyl oder eine Gruppierung -(CH₂)ₚOC(O)CH(R³)CH₂CH₂CH(R⁴)(CH₂)_{q}-Si(R¹)₃ ist;
n eine ganze Zahl ist, ausgewählt aus den Zahlen von 1 bis 2000, beispielsweise von 1 bis 1000 oder von 1 bis 500 oder von 1 bis 100 oder von 1 bis 50 oder von 1 bis 10;
p eine ganze Zahl ist, die bei jedem Vorkommen unabhängig ausgewählt ist aus den Zahlen 2 bis 4 oder aus den Zahlen 2 und 3, vorzugsweise 2; und
q eine ganze Zahl ist, die bei jedem Vorkommen unabhängig ausgewählt ist aus den Zahlen 1 bis 4 oder aus den Zahlen 2 bis 4, vorzugsweise 2 oder 3.

11. Separator nach Anspruch 10, wobei das Alkylen, das in den Gruppen L¹ Alkylen, Alkylenoxycarbonylalkylen oder Alkylencarbonyloxyalkylen enthalten ist, 1 bis 4 Kohlenstoffatome oder 2 bis 4 Kohlenstoffatome oder 2 oder 3 Kohlenstoffatome umfasst; und/oder das in den Gruppen L² Alkylen, Alkylenoxy, Oxyalkylen, Oxyalkylenoxy, Alkylenoxycarbonylalkylen, Alkylencarbonyloxyalkylen, Oxyalkylenoxycarbonylalkylen oder Oxyalkylencarbonyloxyalkylen enthaltene Alkylen 1 bis 4 Kohlenstoffatome oder 2 bis 4 Kohlenstoffatome oder 2 oder 3 Kohlenstoffatome umfasst.

12. Separator nach Anspruch 10, wobei R³ Wasserstoff oder vorzugsweise Methyl ist.

13. Separator nach Anspruch 10 oder 12, wobei R⁴ Wasserstoff oder Methyl, vorzugsweise letzteres, ist.

14. Separator nach einem der Ansprüche 10 bis 13, wobei R¹ bei mindestens einem Vorkommen eine kovalente Bindung zwischen dem Siliziumatom und dem Sauerstoffatom des Trägers ist, oder R¹ bei mindestens drei Vorkommnissen, vorzugsweise bei jedem Vorkommen, eine kovalente Bindung mit dem Träger ist.

15. Separator-Elektrolyt-Komponente, umfassend einen Separator, wie definiert in einem der Ansprüche 1 bis 14, und einen Elektrolyten, der mindestens ein Element umfasst, das ausgewählt ist aus einem Salz, einem polaren, aprotischen und nichtwässrigen Lösungsmittel, einer ionischen Flüssigkeit und einem Polymer.

16. Separator-Elektrolyt-Komponente nach Anspruch 15, die ein polares, aprotisches, nicht-wässriges Lösungsmittel umfasst, vorzugsweise ausgewählt aus zyklischen Carbonaten (Ethylencarbonat (EC), Propylencarbonat (PC), Butylencarbonat (BC), Vinylencarbonat (VC) und Derivaten davon); acyclischen Carbonaten (Dimethylcarbonat (DMC), Diethylcarbonat (DEC), Ethyl- und Methylcarbonat (EMC), Dipropylcarbonat (DPC) und Derivate davon); Lactone (γ- Butyrolacton (γ-BL) und γ-Valerolacton (γ-VL)); azyklischen Ethern (1,2-Dimethoxyethan (DME), 1,2-Diethoxyethan (DEE), Ethoxymethoxyethan (EME), Trimethoxymethan usw.); zyklischen Ethern (Tetrahydrofuran, 2-Methyltetrahydrofuran, 1,3-Dioxolan und Derivate davon); Amiden (Formamid, Acetamid, Dimethylformamid), Nitrile (Acetonitril, Propylnitril), Nitromethan, Phosphorsäuretriester, Dimethylsulfoxid, Sulfolan, Methylsulfolan und Gemischen davon.

17. Separator-Elektrolyt-Komponente nach Anspruch 15 oder 16, die ein Salz eines Alkali- oder Erdalkalimetalls, vorzugsweise ein Lithiumsalz umfasst, vorzugsweise ausgewählt aus Lithiumhexafluorophosphat (LiPF₆), Lithium-bis(trifluormethansulfonyl)imid (LiTFSI), Lithium-bis(fluorosulfonyl)imid (LiFSI), Lithium-2-trifluormethyl-4,5-dicyano-imidazolat (LiTDI), Lithium-4,5-dicyano-1,2,3-triazolat (LiDCTA), Lithium-bis(pentafluoroethylsulfonyl)imid (LiBETI), Lithiumtetrafluoroborat (LiBF₄), Lithium-bis(oxalato)borat (LiBOB), Lithiumnitrat (LiNO₃), Lithiumchlorid (LiCl), Lithiumbromid (LiBr), Lithiumfluorid (LiF), Lithiumperchlorat (LiClO₄), Lithiumhexafluoroarsenat (LiAsF₆), Lithiumtrifluormethansulfonat (LiSO₃CF₃) (LiTf), Lithiumfluoroalkylphosphat Li[PF₃(CF₂CF₃)_{3]} (LiFAP), Lithium-tetrakis(trifluoracetoxy)borat Li[B(OCOCF₃)₄] (LiTFAB), Lithiumbis(1,2-benzenediolato(2-)-O,O')borat Li[B(CeO₂)₂] (LBBB), oder einer Kombination davon.

18. Separator-Elektrolyt-Komponente nach einem der Ansprüche 15 bis 17, die ein Polymer umfasst.

19. Separator-Elektrolyt-Komponente nach einem der Ansprüche 15 bis 18, die eine ionische Flüssigkeit umfasst.

20. Elektrochemische Zelle, umfassend:
- eine negative Elektrode, eine positive Elektrode, ein Elektrolyt und einen Separator, wie definiert in einem der Ansprüche 1 bis 14; oder
- eine negative Elektrode, eine positive Elektrode und eine Separator-Elektrolyt-Komponente, wie definiert in einem der Ansprüche 15 bis 19.

21. Elektrochemische Zelle nach Anspruch 20, wobei die positive Elektrode ein elektrochemisch aktives Material der positiven Elektrode, optional ein Bindemittel und optional ein elektronenleitendes Material umfasst, wobei das elektrochemisch aktive Material der positiven Elektrode vorzugsweise ausgewählt ist aus Metallphosphaten, lithiierten Metallphosphaten, Metalloxiden und lithiierten Metalloxiden.

22. Elektrochemische Zelle nach Anspruch 20 oder 21, wobei die negative Elektrode ein elektrochemisch aktives Material der negativen Elektrode umfasst, wobei das elektrochemisch aktive Material der negativen Elektrode vorzugsweise ausgewählt ist aus Alkali- und Erdalkalimetallen und Legierungen, die diese umfassen (beispielsweise Lithium, Natrium, Kalium), Graphit und anderen Kohlenstoffquellen (poröser Kohlenstoff, Kohlenstoffnanoröhren usw.), Metalloxide und lithiumhaltige Metalloxide (wie beispielsweise Lithiumtitanat, Vanadiumoxid, lithiumhaltiges Vanadiumoxid usw.), und organische Anodenmaterialien (wie beispielsweise Perylen-3,4,9,10-tetracarboxylat (PTCLi4), Naphthalin-1,4,5,8-tetracarboxyldianhydrid (NTCDA), Perylen-3,4,9,10-tetracarboxyldianhydrid (PTCDA), π-konjugierte Dicarboxylate, und Anthrachinon).

23. Elektrochemischer Akkumulator, umfassend mindestens eine elektrochemische Zelle, wie definiert in einem der Ansprüche 20 bis 22, wobei der elektrochemische Akkumulator vorzugsweise ausgewählt ist aus einer Lithiumbatterie, einer Natriumbatterie, einer Kaliumbatterie und einer Lithium-Ionen-Batterie.

## Claims

1. A separator of electrochemical cell comprising cellulose fibers and a flame retardant, wherein the flame retardant comprises an organophosphorus group, a phosphorus-containing polymeric chain, or one of their combinations, the flame retardant being fixed on a support by one or more covalent bond(s), the support being integrated into the porosity of the cellulose fibers and/or fixed on the cellulose fibers by electrostatic intermolecular interactions and/or by hydrogen bonds, wherein the support is in the form of particles formed from an electrochemically inert and electronically non-conductive material.

2. The separator of claim 1, wherein the cellulose is natural.

3. The separator of claim 1, wherein the cellulose is a modified cellulose, which preferably comprises hydrophilic groups or hydrophobic groups.

4. The separator of any one of claims 1 to 3, wherein the average size of the cellulose fibers is:
- between 5 nm and 5 mm, or between 500 nm and 3 mm, or between 1 µm and 3 mm, between 100 µm and 3 mm, or between 250 µm and 3 mm;
- between 750 µm and 2.5 mm, or between 1 mm and 2.5 mm, or between 0.5 mm and 3 mm, or between 1 mm and 3 mm; or
- between 5 nm and 500 µm, or between 50 nm and 100 µm, or between 250 nm and 50 µm, or between 250 nm and 10 µm.

5. The separator of any one of claims 1 to 4, wherein the electrochemically inert material is an ionic conductor.

6. The separator of claim 5, wherein the electrochemically inert material is selected from an inorganic compound and a polymer.

7. The separator of claim 6, wherein the inorganic compound is a metallic or non-metallic oxide or a ceramic.

8. The separator of claim 6, wherein the inorganic compound is selected from Al₂O₃, ZrO₂, Cr₂O₃, TiO₂, CeO₂, Fe₂O₃, B₂O, and SiO₂.

9. The separator of any one of claims 1 to 8, wherein the flame retardant is selected from:
an organophosphorus group or phosphorus-containing polymeric chain comprising a phosphate or phosphonate ester group linked to the support by at least one group selected from alkylene, alkenylene, arylene, ether, ester, carbonate, carbamate, amine, amide, diazonium, triazene, silane, and a combination of at least two thereof.

10. The separator of claim 9, wherein the organophosphorus group or phosphorus-containing polymeric chain is of Formula I, II, III or IV: 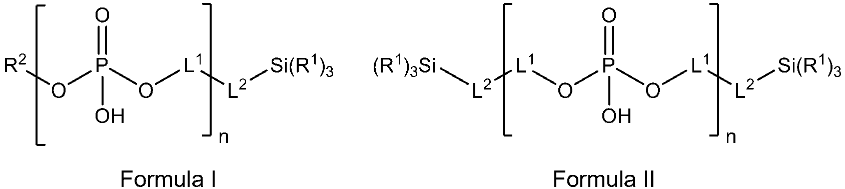 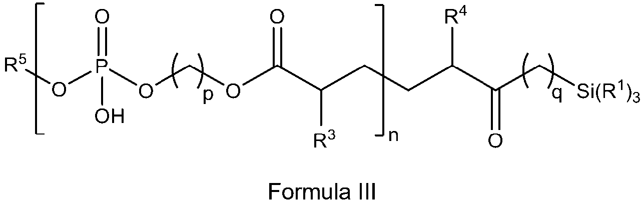 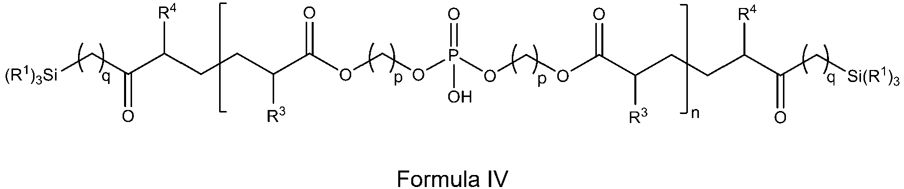 wherein,
L¹ is, independently at each occurrence, selected from alkylene, alkyleneoxycarbonylalkylene, and alkylenecarbonyloxyalkylene;
L² is selected from an alkylene, alkyleneoxy (linked to the silicon atom by an oxygen atom), oxyalkylene (linked to the silicon atom by a carbon atom), oxyalkyleneoxy, alkyleneoxycarbonylalkylene, alkylenecarbonyloxyalkylene, oxyalkyleneoxycarbonylalkylene, and oxyalkylenecarbonyloxyalkylene;
R¹ is, independently at each occurrence, an OH, Cl, C₁₋₆alkyl, OC₁₋₆alkyl group, or a covalent bond between the silicon atom and the oxygen atom from the support, and where at least one R¹ is such a covalent bond;
R² is H, C₁₋₆alkyl, or a -L¹-L²-Si(R¹)₃ group;
R³ and R⁴ are, independently at each occurrence, a hydrogen atom or a C₁₋₃alkyl group; R⁵ is H, C₁₋₆alkyl, or a -(CH₂)ₚOC(O)CH(R³)CH₂CH₂CH(R⁴)(CH₂)_{q}-Si(R¹)₃ group;
n is an integer selected from the numbers from 1 to 2000, for example, from 1 to 1000, or from 1 to 500, or from 1 to 100, or from 1 to 50, or from 1 to 10;
p is an integer independently at each occurrence selected from the numbers 2 to 4, or the numbers 2 and 3, preferably 2; and
q is an integer independently at each occurrence selected from the numbers 1 to 4, or the numbers from 2 to 4, preferably 2 or 3.

11. The separator of claim 10, wherein the alkylene comprised in the L' alkylene, alkyleneoxycarbonylalkylene, or alkylenecarbonyloxyalkylene groups comprise from 1 to 4 carbon atoms, or from 2 to 4 carbon atoms, or 2 or 3 carbon atoms; and/or the alkylene comprised in the L² alkylene, alkyleneoxy, oxyalkylene, oxyalkyleneoxy, alkyleneoxycarbonylalkylene, alkylenecarbonyloxyalkylene, oxyalkyleneoxycarbonylalkylene, or oxyalkylenecarbonyloxyalkylene groups comprises from 1 to 4 carbon atoms, or from 2 to 4 carbon atoms, or 2 or 3 carbon atoms.

12. The separator of claim 10, wherein R³ is a hydrogen or a methyl, preferably a methyl.

13. The separator of claim 10 or 12, wherein R⁴ is a hydrogen or a methyl, preferably a methyl.

14. The separator of any one of claims 10 to 13, wherein R¹ is a covalent bond between the silicon atom and the oxygen atom of the support in at least one occurrence, or R¹ is a covalent bond with the support in at least three occurrences, preferably at each occurrence.

15. A separator-electrolyte component comprising a separator as defined in any one of claims 1 to 14 and an electrolyte comprising at least one element selected from a salt, a polar, aprotic and non-aqueous solvent, an ionic liquid, and a polymer.

16. The separator-electrolyte component of claim 15, which comprises a polar, aprotic and non-aqueous solvent, preferably selected from cyclic carbonates (ethylene carbonate (EC), propylene carbonate (PC), butylene carbonate (BC), vinylene carbonate (VC), and their derivatives); acyclic carbonates (dimethyl carbonate (DMC), diethyl carbonate (DEC), ethyl methyl carbonate (EMC), dipropyl carbonate (DPC), and their derivatives); lactones (γ-butyrolactone (γ-BL) and γ-valerolactone (y-VL)); acyclic ethers (1,2-dimethoxyethane (DME), 1,2-diethoxyethane (DEE), ethoxymethoxyethane (EME), trimethoxymethane, etc.); cyclic ethers (tetrahydrofuran, 2-methyltetrahydrofuran, 1,3-dioxolane, and their derivatives); amides (formamide, acetamide, dimethylformamide), nitriles (acetonitrile, propylnitrile), nitromethane, phosphoric acid triester, dimethyl sulfoxide, sulfolane, methylsulfolane, and mixtures thereof.

17. The separator-electrolyte component of claim 15 or 16, which comprises a salt of an alkali or alkaline earth metal, preferably a lithium salt, preferably selected from lithium hexafluorophosphate (LiPF₆), lithium bis(trifluoromethanesulfonyl)imide (LiTFSI), lithium bis(fluorosulfonyl)imide (LiFSI), lithium 2-trifluoromethyl-4,5-dicyano-imidazolate (LiTDI), lithium 4,5-dicyano-1,2,3-triazolate (LiDCTA), lithium bis(pentafluoroethylsulfonyl)imide (LiBETI), lithium tetrafluoroborate (LiBF₄), lithium bis(oxalato)borate (LiBOB), lithium nitrate (LiNO₃), lithium chloride (LiCl), lithium bromide lithium (LiBr), lithium fluoride (LiF), lithium perchlorate (LiClO₄), lithium hexafluoroarsenate (LiAsF₆), lithium trifluoromethanesulfonate (LiSO₃CF₃) (LiTf), lithium fluoroalkylphosphate Li[PF₃(CF₂CF₃)₃] (LiFAP), lithium tetrakis(trifluoroacetoxy)borate Li[B(OCOCF₃)₄] (LiTFAB), lithium bis(1,2-benzenediolato(2-)-O,O')borate Li[B(C₆O₂)₂] (LBBB), or a combination thereof.

18. The separator-electrolyte component of any one of claims 15 to 17, which comprises a polymer.

19. The separator-electrolyte component of any one of claims 15 to 18, which comprises an ionic liquid.

20. An electrochemical cell comprising:
- a negative electrode, a positive electrode, an electrolyte and a separator as defined in any one of claims 1 to 14; or
- a negative electrode, a positive electrode, and a separator-electrolyte component as defined in any one of claims 15 to 19.

21. The electrochemical cell according to claim 20, wherein the positive electrode comprises a positive electrode electrochemically active material, optionally a binder, and optionally an electronically conductive material, the positive electrode electrochemically active material being preferably selected from metal phosphates, lithiated metal phosphates, metal oxides, and lithiated metal oxides.

22. The electrochemical cell of claim 20 or 21, wherein the negative electrode comprises a negative electrode electrochemically active material, the negative electrode electrochemically active material being preferably selected from alkali and alkaline earth metals and alloys comprising them (for example, lithium, sodium, potassium), graphite and other carbon sources (porous carbon, carbon nanotubes, etc.), metal oxides and lithiated metal oxides (such as lithium titanate, vanadium oxide, lithiated vanadium oxide, etc.), and organic anode materials (such as tetra-lithium perylene-3,4,9,10-tetracarboxylate (PTCLi4), naphthalene-1,4,5,8-tetracarboxylic dianhydride (NTCDA), perylene-3,4,9,10-tetracarboxylic dianhydride (PTCDA), π-conjugated dicarboxylates, and anthraquinone).

23. An electrochemical accumulator comprising at least one electrochemical cell as defined in any one of claims 20 to 22, said electrochemical accumulator being preferably selected from a lithium battery, a sodium battery, a potassium battery, and a lithium-ion battery.
